# EUROPEAN PATENT SPECIFICATION

(11) **EP 0 679 931 B1**
(45) Date of publication and mention of the grant of the patent: **20.06.2001**
(21) Application number: 95109831.8
(22) Date of filing: 01.08.1989
(51) Int. Cl.: G03B 43/00, G03B 17/18, G03B 7/08, G03B 7/091

(54) **Electronically controlled camera**
Elektronisch gesteuerter Kamera
Caméra à commande électronique

(30) Priority: 01.08.1988 JP 10211588; 19.08.1988 JP 10899888; 25.08.1988 JP 11141288
(43) Date of publication of application: 02.11.1995
(62) Divisional of application: 89114224.2
(73) Proprietor: Asahi Kogaku Kogyo Kabushiki Kaisha, Tokyo (JP)
(72) Inventor: Kobayashi, Takeo, c/o Asahi Kogaku Kogyo K.K., Tokyo (JP); Numako, Norio, c/o Asahi Kogaku Kogyo K.K., Tokyo (JP); Tabata, Yasushi, c/o Asahi Kogaku Kogyo K.K., Tokyo (JP); Nagai, Katsutoshi, c/o Asahi Kogaku Kogyo K.K., Tokyo (JP)
(74) Representative: Schaumburg, Thoenes, Thurn Patentanwälte

(56) References cited:
- GB-A- 2 038 010
- GB-A- 2 180 074

## Description

The present invention relates to an electronically controlled camera according to the generic part of the independent claim. A camera of this kind is described in GB-A-2 180 074.

Nowadays, electronically controlled cameras incorporating a CPU (Central Processing Unit) therein are increasingly prevailing. In electronically controlled cameras of this type, the CPU executes the controls required for camera operation such as light intensity measurement, distance measurement, zoom lens driving, film winding, rewinding, indication on a LCD (Liquid Crystal Display) panel.

Taking the example of zoom lens movement, when a TELE switch is operated, a zoom motor is rotated to pull a zoom lens forward toward a TELE extremity, while with a WIDE switch operated, the zoom motor is rotated in reverse to withdraw the zoom lens to a WIDE extremity. Also, when the main switch is operated after a back cover is closed with a film cartridge inside the camera, automatic loading takes place as a black-shot film advancing operation.

Further, each time the shutter is operated, the film is automatically wound to be pulled out of the film cartridge. When a certain number of film frames are wound, a wind-up motor is operated to allow the film automatically to be wound up into the film cartridge.

The shutter speed, the number of pictures taken, the lens focal length and the battery capacity are indicated on the LCD panel. A viewfinder indicates a strobe flash mode with a red lamp turned on, a strobe charge on with the red lamp blinking, a focus lock with a green lamp turned on, and a short distance warning with the green lamp blinking.

When fabricating and inspecting a camera of this type, it is necessary to perform inspection to check if the camera is able to carry out the desired operations. In such inspection, it has been necessary to actually use the camera or to start a dedicated operation test program stored in the CPU in advance, as described in GB-A-2 038 010. An extensive labor has thus been required for inspection works, which is not desirable in view of the inspection process.

The above mentioned camera of GB-A-2 180 074 enables testing by means of a special switch whereby errors in displayed fotographic parameters may be corrected by adjusting correction resistors. Such adjustment does not enable an inspection of various camera functions without requiring actual use of the camera or special elements for switching the camera into a test mode.

It is therefore the problem to be solved by the invention to provide an improved electronically controlled camera which can easyly be inspected without the need of special elements or handling.

The invention solves this problem by the features specified in the independent claim. Advantageous further developments are described in the dependent claims.

The invention will now be further described with reference to the accompanying drawings in which :
Figs. 1 through 4 show the external appearance of a camera embodying the invention, wherein Fig. 1 is a front view, Fig. 2 a plan view, Fig. 3 a rear view, Fig. 4 a rear view with open back cover;
Fig. 5 is a block diagram showing the control system of the camera;
Figs. 6 through 9 are flow charts showing the operation of the main CPU of the camera, wherein Fig. 6 shows the main flow, Fig. 7 a flow of external control, Fig. 8 a flow of serial signal input/output, and Fig. 9 is a flow of command code processing;
Fig. 10 is a block diagram of an image plane exposure quantity inspection unit;
Fig. 11 is a flow chart of the image plane exposure quantity inspection;
Fig. 12 is a flow chart of camera control processing;
Fig. 13 is a timing chart for explaining data transfer between the CPU of the camera and an external controller;
Fig. 14 is a flow chart explaining data transfer shown in Fig. 13;
Fig. 15 is a flow chart explaining the operation inspection of the camera;
Fig. 16 is shows a main flow chart disclosing the instructions relating to a modified inspection system;
Fig. 17 is a flow chart for light measuring, distance measuring and shutter-release processings;
Fig. 18 is a flow chart showing data input/output at the main CPU;
Fig. 19 is a flow chart showing the operation of the sub CPU of the camera;
Fig. 20 is a flow chart showing serial signal input/output at the sub CPU;
Figs. 21 and 22 are timing charts showing the timing of data input/output;
Fig. 23 is a flow chart illustrating the operation of a monitor unit for inspection of the camera; and
Fig. 24 shows an AEAF flow chart relating to the third inspection system.

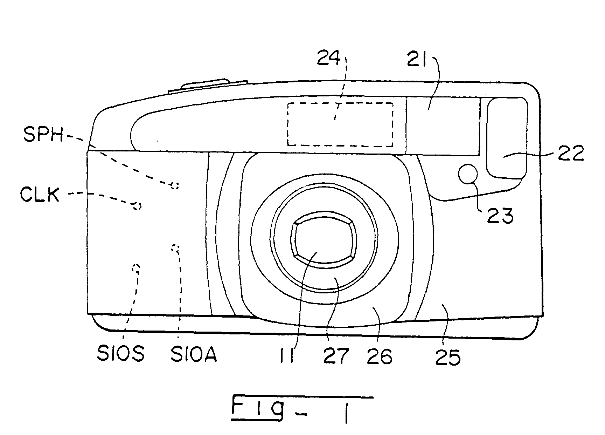

The camera illustrated in Figs. 1 through 4 is a compact lens shutter camera in which a taking lens (zoom lens) 11 and a finder system 21 are installed independently. On the front, a strobe 22, a photometric cell 23, and a distance measurement unit 24 are installed. The taking lens 11 is supported by a movable lens barrel 27 installed in a fixed lens barrel 26 secured to a camera body 25.

Inside the grip part of a surface cover, as shown on the left of Fig. 1, four terminals, SPH, CLK, SIOA and SIOS, which are explained later, are provided for external connections.

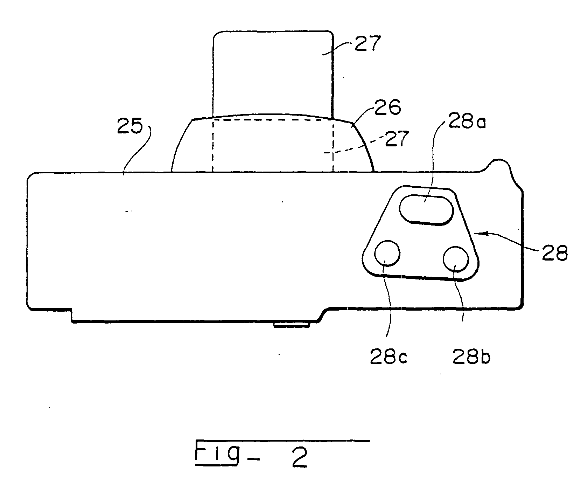

The position of the movable lens barrel 27 changes between its retracted position illustrated by broken line and its extended position illustrated by solid line in Fig. 2 to vary the focal length of the taking lens 11.

On top of the camera a shutter button 28 which is also used as a zoom button is provided. This shutter button 28 has a triangular shape and its front part 28a is a two-step switch incorporating a photometric switch and a shutter release switch which will be described later, one end 28b of the rear part is a zoom-tele switch and the other end 28c of the rear part is a zoom-wide switch. These three parts 28a, 28b and 28c can be operated independently so that, when one of them is in operation, the other two cannot be operated.

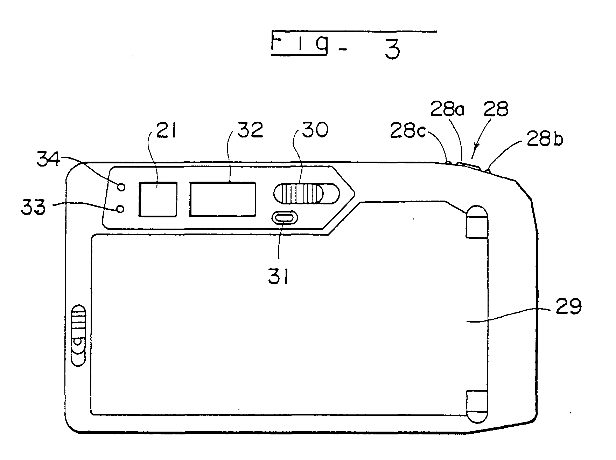

On the back of the body 25, as shown in Fig. 3, a main switch 30, a mode button 31 and a LCD panel 32 are provided above a back cover 29. The main switch 30 is a slide switch which has three positions and operates as a lock switch and a macro switch which are described later.

Besides the finder 21, a red indicator lamp 33 for indication of strobe information and a green indicator lamp 34 for indication of distance measurement information are arranged.

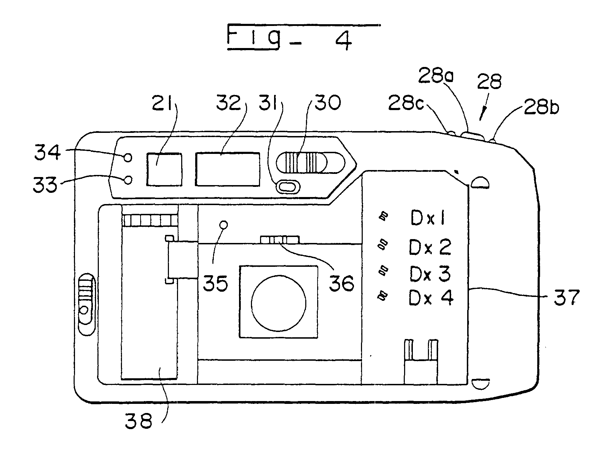

Moreover, with the back cover 29 opened, as shown in Fig. 4, an actuating member 35 to turn on and off a film switch to be described later which checks whether a film is present or not, and a roller 36 which rotates upon running of the film are provided above an aperture. In a film cassette chamber 37 in which the film catridge is seated, four sets of Dx contacts Dx1, Dx2, Dx3 and Dx4, each set of which comprises two electrodes, are provided. Dx1 is a ground contact, and ISO sensitivity 25 through 3200 is detected by 8 different 3-bit signals from the other three sets of contacts.

A Dx code input system reads the Dx code. The ON/OFF status of each contact and the ISO sensitivity are shown in Table 1.

**Table 1**

| Dx4 | Dx3 | Dx2 | ISO |
|---|---|---|---|
| OFF | OFF | OFF | 25 |
| OFF | OFF | ON | 50 |
| OFF | ON | OFF | 100 |
| OFF | ON | ON | 200 |
| ON | OFF | OFF | 400 |
| ON | OFF | ON | 800 |
| ON | ON | OFF | 1600 |
| ON | ON | ON | 3200 |

Reference numeral 38 indicates a spool axis for winding a film drawn from the film cartridge.

This camera automatically detects the variation of the focal length of the taking lens 11, the open F-value which changes according to the above variation and the position change of the lens 11 among the wide extremity, the tele extremity, the MACRO position for short-distance photography and the LOCK position, and then carries out various controls according to these data.

A code plate is attached on a cam cylinder for lens movement, and several brushes which contact the code plate are arranged on the camera body. The information detected by the conducting conditions of these terminals is output as a position code POS.

In this camera, the focal length and the F-number of the taking lens 11 are set to 38 mm at F4.5 and 60 mm at F6.7, and the lens position detected from the position code POS is divided into fifteen steps OH - EH. Here, "H" stands for hexadecimal and will be used for indication of the data to be described later.

When POS = 0, the movable lens barrel 27 is retracted into the fixed lens barrel 26 and it is in the LOCK position where the front of the taking lens 11 is covered by a barrier not illustrated. POS = 2H - CH means the zoom range and POS = EH means the MACRO position for short-distance photography. Stopping of the lens 11 in the ranges between the LOCK position and zoom range (POS = 1H) and between the zoom range and the MACRO position (POS = DH) is inhibited.

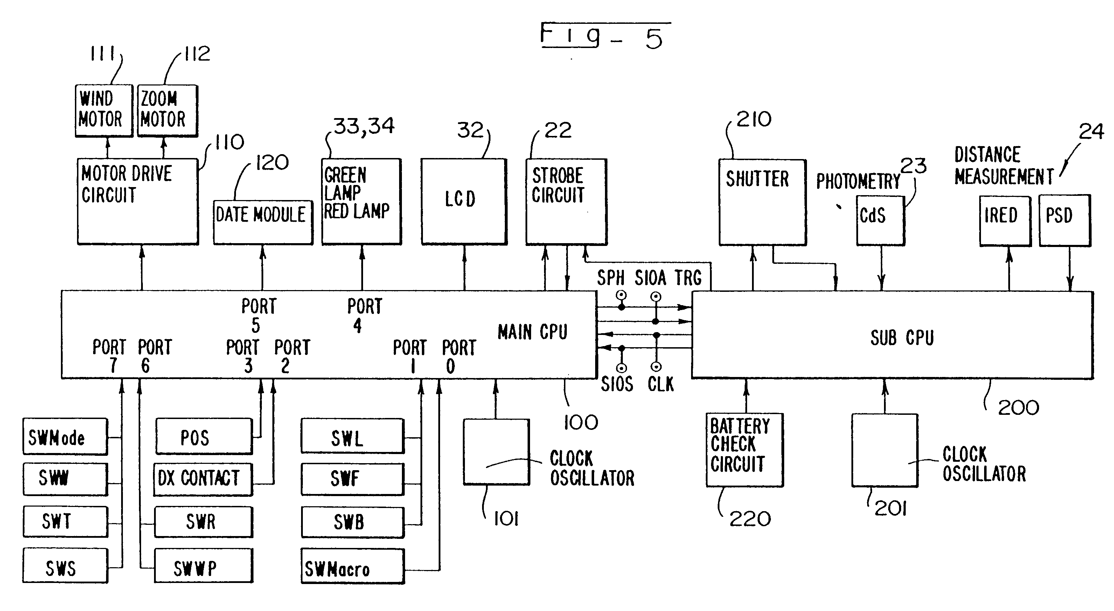

The control unit of this camera will be explained referring to Fig. 5.

A main CPU 100 is the core of this control unit and a sub CPU 200 is connected to the main CPU 100 via four signal lines SPH, CLK, SIOA and SIOS, for shutter-related processings.

Each signal line has a terminal which for inputting and outputing signals to and from the camera.

The signals taken from each terminal during executing data transfer between the main CPU 100 and the sub CPU 200 have the following meanings.

SPH is a signal for the main CPU 100 to enable the sub CPU 200. The operation will start with "L". CLK is a clock signal for transferring serial data from the sub CPU 200. SIOA is a signal for transferring serial data from the main CPU 100 to the sub CPU 200 and SIOS is a signal for transferring serial data from the sub CPU 200 to the main CPU 100. These terminals are also used for exchange of data and commands with an external unit during externally-controlled processings to be described later.

These data and commands are 8 bit serial signals in synchronism with the CLK signal.

As long as there is a battery in the camera, the main CPU 100 operates all the time in synchronism with the clock from a clock generating circuit 101, and controls other circuits in dependence on the switch input detected or on the status of the camera.

Controlled units are a motor drive circuit 110 for driving a winding motor 111 and a zoom motor 112, a date module 120 connected with PORT 5 of the main CPU 100, a red indicator lamp 33 and a green indicator lamp 34 connected with PORT 4, the LCD panel 32, and the strobe 22.

The following switches are provided :
(1) Macro switch SWM which will be ON when a slide lever of the main switch 30 is set to the MACRO position;
(2) Battery switch SWB for checking whether a battery is present or not;
(3) Film switch SWF turned ON and OFF by the operating member 35 pushed by the film;
(4) Lock switch SWL which will be ON when the slide lever of the main switch 30 is set to the LOCK position;
(5) Wind pulse switch SWWP generating pulses in response to rotation of the roller 36 due to film transport;
(6) Release switch SWR which will be ON when the front part 28a of the shutter button 28 is fully pressed down;
(7) Photometric switch SWS which will be ON when the front part 28a of the shutter button 28 is half pressed down;
(8) Zoom tele switch SWT which will be ON when the one end part 28b of the shutter button 28 is pressed;
(9) Zoom wide switch SWW which will be ON when the other end part 28c of the shutter button 28 is pressed; and
(10) Mode switch SWM which can be switched between forced strobe flash and automatic strobe flash by pressinsg the mode button 31.

Of these switches, (1) is connected to PORT 0 of the main CPU 100, (2) through (4) to PORT 1, (5) and (6) to PORT 6 and (7) through (10) to PORT 7.

Furthermore, the Dx contacts for input of the Dx code are connected to PORT 2 of the main CPU 100, and the position code POS is sent to PORT 7 from the brushes in sliding contact with code plate 13.

On the other hand, when the power is supplied to the sub CPU 200 by the SPH "L" signal which is output from the main CPU 100, the sub CPU 200 will start operation in synchronism with the clock signal of a clock circuit 201 and performs the photometric, the distance measurement and the shutter-related processings while exchanging signals with the main CPU 100. The sub CPU 200 controls a shutter block 210, a battery check circuit 220, the photometric cell 23 and the distance measurement unit 24, and also generates the trigger pulse TRG for the strobe 22 in synchronism with the shutter release.

The distance measurement unit 24 has a well-known structure and has an infrared emitting diode IRED to emit light to a photographed subject and a position sensor PSD to receive light reflected in accordance with a trigonometrical calculation.

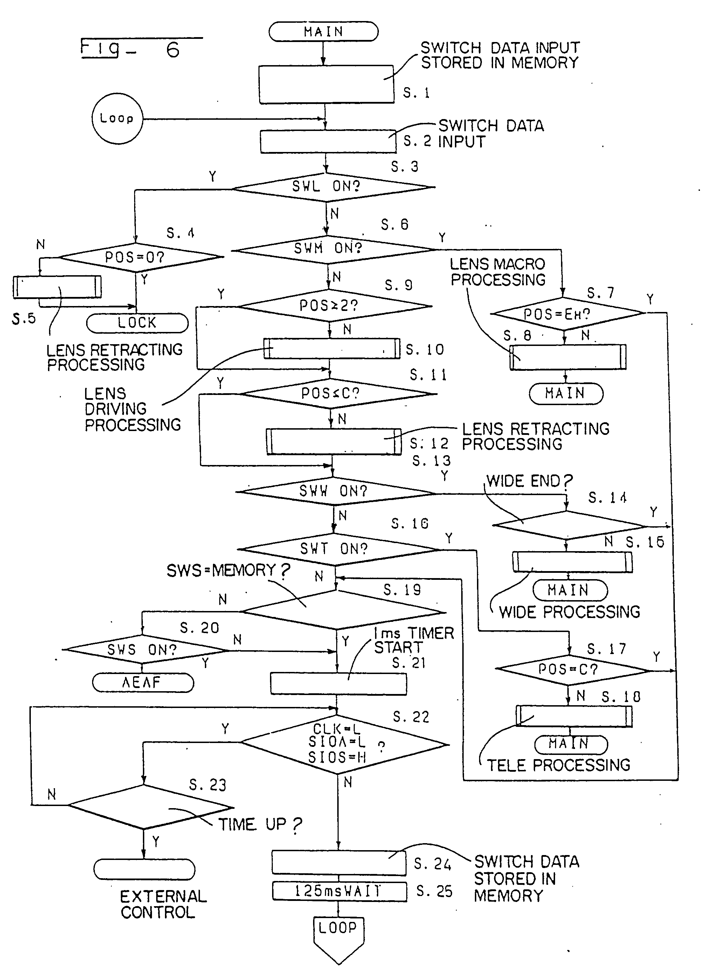

Next, according to the flow charts shown in Figs. 6 through 10, the programs executed by the above-mentioned main CPU 100 will be explained.

Fig. 6 shows the main flow of the basic operations of the camera. Other operations are those diverged from the main flow or those exectuted as called by the main flow dependent on various conditions.

The main CPU 100 inputs the condition of each switch which was described before and stores the detected results in a memory at step S.1.

Then, at S.2, the conditions of the switches are input again. This is to detect dynamic changes of the switches by comparing data with the data stored at S.1.

At S.3, the condition of the lock switch SWL is checked according to the switch data input at S.2. The camera is in a non-use state, when the lock switch SWL is ON. In this case, whether the position code POS is "0" or not is checked at S.4. This is to check if the taking lens 11 is in the lock position. When it is in the lock position, the processing advances to Flow LOCK. When the lock switch SWL is in the state ON, in the Flow LOCK, the zooming, photometric measurement, distance measurement and release operations are inhibited.

When the lens 11 is not in the lock position, the lens retracting process to retract the taking lens 11 to the lock position is executed at S.5.

When the lock switch SWL is OFF, the following preparation processes for taking a photograph are carried out.

First, the condition of the macro switch SWM is checked at S.6. When the macro switch SUM is ON, the taking lens 11 has to be at the macro position for short-distance photography. Accordingly, whether the value of the position code POS is EH or not is checked at S.7. When POS = EH, the taking lens 11 is already in the macro position and therefore the process advances to S.19.

When POS ≠ EH is judged at S.7, the Lens Macro Processing is executed to move the lens out at S.8, then the process returns to the start of the main flow.

When the macro switch SWM is judged OFF at S.6, as the taking lens 11 has to be in the range of POS = 2H - CH, that is the zoom area, whether the position code POS is above 2H or not is checked at S.9. Then, if POS is below 2H (POS = 0H or 1H), the taking lens 11 is in the lock position or between the lock position and the zoom area. Therefore, the Lens Drive Process wherein the lens is moved out until POS = 2H is executed.

Next, whether the position code POS is CH or below CH is checked at S.11. When POS is above CH, the taking lens 11 is in the macro position or between the macro position and the zoom area. Therefore, the Lens Retracting Process wherein the lens is moved back to the POS = CH position is executed.

When the lens 11 is in the zoom area or is moved to the zoom area at S.10 or S.12, the state of the zoom wide switch SWW is checked at S.13.

When this switch SWW is ON, whether the taking lens 11 is at the wide extremity or not is checked at S.14. When the taking lens is already at the wide extremity, the lens 11 cannot move any further in the wide direction. Therefore the processing goes to S.19. When the lens 11 is not at the wide extremity, the lens 11 is moved to the wide extremity at S.15 (wide processing). In the Wide Processing, the lens movement stops when the wide switch SWW is turned OFF or the lens 11 reaches the wide extermity, then the process returns to the start of the main flow.

When the wide switch SWW is judged OFF at S.13, the state of the zoom tele switch SWT is checked at S.16.

When the zoom tele switch SWT is ON, whether the position code POS is CH or not is checked at S.17. When POS is CH, the taking lens 11 is already at the tele extremity where the focal length is 60 mm. Therefore, the process jumps to S.19.

When POS is not CH, the Tele Processing to move the lens to the tele extremity is exesuted at S.18. In the Tele Processing, the lens movement stops when the tele switch SWT is turned OFF or the lens 11 reaches the tele extremity. Then the process returns to the start of the main flow.

When both the zoom tele and the wide switch SWT, SWW are not ON, the change of the status of the photometric switch SWS is checked at S.19 and S.20, then the process goes to the AEAF operation to execute the photometric measurement, the distance measurement and the shutter release processings when the photometric switch SWS turns from OFF to ON.

When there is no status-change of the photometric switch SWS or when it changes from ON to OFF, a 1 ms timer is set and started at S21.

At S22, the main CPU 100 detects the signal levels of CLK, SIOA, SIOS and if CLK = L, SIOA = L, SIOS = H, it determines that a signal has been entered to start an external control, the process then going to S23. This status continues until the time of 1 ms is up, and thereafter the main CPU 100 goes to the External Control Flow.

SIOS, CLK are "H" and SIOA is "L" when the process executes the main flow. If CLK is now forcibly turned to "L" from outside, the camera is designed to recognize that this is an external control mode. It should be noted that a 1 ms waiting time prevents erroneous operation due to external noises.

If judgment in S22 is negative from the beginning, or it is turned to negative before time up, the stored switch data are rewritten to the data entered in S2 and, after stopping the process for 125 ms in S25, the process loops to S2 for further execution.

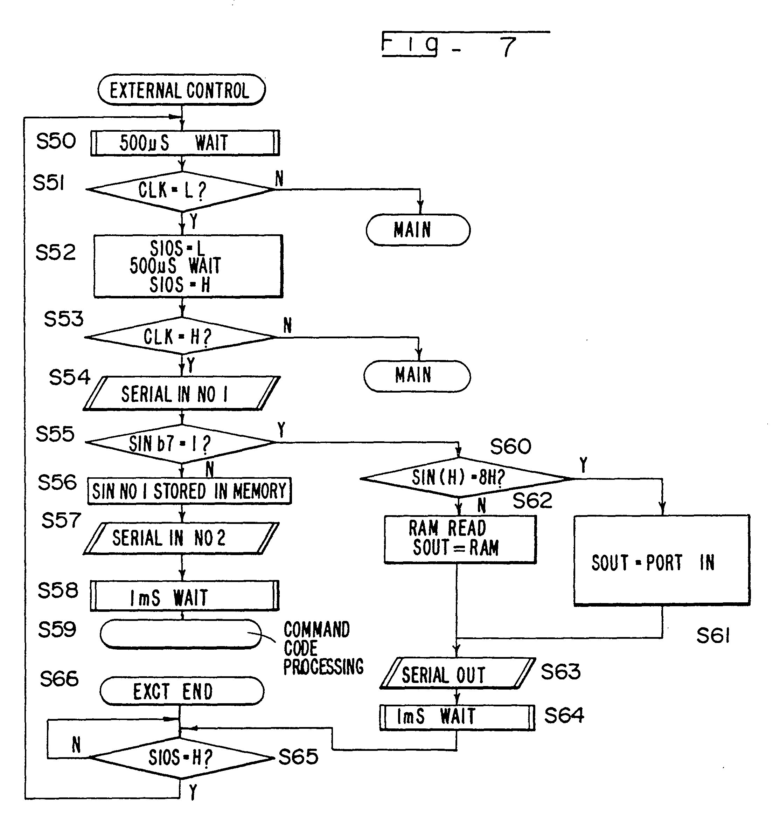

The operation of the camera when the CPU 100 enters the external control mode will be described with reference to Fig. 7.

When external control starts, the main CPU 100 executes data exchange with an external controller to be described later via the CLK and SIOS signal lines. Such input and output signals consist of two sets of 8-bit serial signals.

The first 8 bit serial signal is a signal which the camera receives from the external controller, according to which it is determined whether the second 8 bit serial signal is defined as an output of information stored in the camera to the external controller or as a control command from the external controller to the camera.

The first and second serial signals are shown in Table 2 and Table 3.

Table 2 shows an output mode state where the second serial signal is an output from the camera, the first serial signal being SIO IN 1 and the second serial signal SIO OUT. Table 3 shows an input mode state with the second serial signal is a control command for the camera, the first serial signal being SIO IN 1 and the second serial signal SIO IN.

**Table 2**

| Output mode | | | | |
|---|---|---|---|---|
| SIO | IN 1 | SIO | OUT | |
| 7654 | 3310 | 7654 | 3210 | |

| [PORT READ] | | | | |
|---|---|---|---|---|
| 1000 | 0000 | XXXX | dddd | PORT 0 READ:SWMacro |
| | 0001 | XXXX | dddd | PORT 1 READ:SWB, SWF, SWL |
| | 0010 | XXXX | dddd | PORT 2 READ:Dx code |
| | 0011 | XXXX | dddd | PORT 3 READ: Zoom code |
| | 0110 | XXXX | dddd | PORT 6 READ:SWWP, SWR |
| | 0111 | XXXX | dddd | PORT 7 READ:SWS,SWT,SWW,SWMode |

| [RAM READ] | | | | |
|---|---|---|---|---|
| 1aaa | aaa0 | dddd | dddd | aaa aaa0: 10-7E |
| | | | | dddd(b7-b4):Add+1 DATA |
| a: address | | d: data | | dddd(b3-b0):Add DATA |

**Table 3**

| Input mode | | | | |
|---|---|---|---|---|
| SIO | IN 1 | SIO | IN 2 | |
| 7654 | 3310 | 7654 | 3210 | |

| [Shutter Control] | | | | |
|---|---|---|---|---|
| 0001 | 1010 | XXXX | XXXX | NOMAL released |
| | 1011 | XXXX | XXXX | Distance and light measure only, |
| | | | | not released |
| | 100X | XXXX | XXXX | Distance and light measure passed and released |
| | 1110 | XXXX | XXXX | Exposure amount test (Dx ignored) |

| [RAM WRITE] | | | | |
|---|---|---|---|---|
| 0010 | dddd | aaaa | aaaa | aaa aaa: Add 00-FF dddd:DATA aaaa aaaa=00-FF:RAM Add=000-0BF |
| | | | | aaaa(b7-b4)=C-F: |
| | | | | RAM Add=1E+aaaa(b3-b0) |

| [Output Control] | | | | |
|---|---|---|---|---|
| 0011 | 0XXX | 111X | 000X | Initial value |
| | | 011X | 001X | WIND MOTOR forward |
| | | 110X | 100X | WIND MOTOR reverse |
| | | 110X | 010X | ZOOM MOTOR forward |
| | | 111X | 001X | ZOOM MOTOR reverse |
| | 1XXX | XXXd | dddX | PORT 5,4 OUT |
| | | | | XXXd dddX |
| | | | | b4:DTRG b3:RLMP b2:GLMP b1:SPH |

| [Operation Control] | | | | |
|---|---|---|---|---|
| 100 | 0000 | XXXX | dddd | MOVE POS: dddd=POS(0-E) |
| | 0001 | XXXX | XXXX | INT POS: POS initilize |
| | 0011 | XXXX | XXXX | TSTREW: rewind start |
| | 0100 | XXXX | XXXX | TSTLD: loading start |
| | 0101 | XXXX | XXXX | TSTWD: wind start |

The output mode and the input mode are distinguished by bit 7 of the first serial signal SIO IN 1, and the main CPU 100 of the camera executes the process in the output mode when bit 7 is 1 and in the input mode when bit 7 is 0.

In Fig. 7, the CPU 100 examines whether or not CLK is "L" at S.51 after stopping processing for 500 µs at S.50. It determines that, when CLK is "H", the camera is not externally controlled and advances to the start of the main flow.

If CLK is "L", the main CPU 100 defines SIOS as "L" at S52, then turning it to "H" again after 500 µs. It then examines whether or not CLK is "H" in S53. It determines that the camera is externally controlled when CLK is "L" and goes to the main flow. If it is "H", the input of the first serial signal SIO IN 1 is effected subsequently.

Since it is a prerequisite for starting this process that SIOS is "H", a 500 µs pulse is generated at "L" of SIOS at S52.

Thus, the external controller is allowed to perform the camera control when this pulse is detected and CLK initially set at "L" level is shifted to "H" level. The camera accepts the external control only when such synchronization is effected.

At S54, the first serial signal SIO IN 1 is transferred from the external controller to the camera.

It is examined at S55 whether or not bit 7 of the first serial signal received is 1. As stated above, the state in which the bit 7 is 0 corresponds to the input mode in which a control command is sent from the external controller to the camera as the second serial signal. In this case, the main CPU 100 stores the first serial signal at S56 so that it can be used for later checking. The second serial signal is again input at S57. After this input processing, the process is stopped for 1 ms at S58 and thereafter the process goes to the command code processing to be described later via S59.

If bit 7 of the first serial signal is determined as 1 at S56, this state corresponds to the output mode in which a data is sent from the camera to the external controller as a second serial signal. In this case, it is examined at S60 whether or not high nibbles, i.e., the higher-order 4 bits of the first serial signal are 8H. 8H here is the binary code which corresponds to "1000".

As shown in Table 2, the case where the high nibbles of the first serial signal are 8 corresponds to the mode of PORT READ in Table 2. In this case, the data at a port specified by the lower-order 4 bits of the first serial signal are set to at S61 as the lower 4 bits of the second serial signal SIO OUT.

If high nibbles of the first serial signal are not 8, the data at an address specified by bit 6 to bit 1 of the first serial signal are set as the lower 4 bits of the second serial signal SIO OUT, while the higher-order address data at the specified address are also set as higher-order 4 bits. This enables reading RAM data at addresses 10H to 7FH.

At S63, the data set at S61 and S62 is generated as the second serial signal. The external controller is allowed to detect the status of the camera by reading this data.

After the above processing, the main CPU 100 stops the process for 1 ms at S64 and advances to S50 after it finds SIOS turned to "H" at S65.

It is noted that some of the external control end terminals [EXCT END] indicated at S66 diverge from the command code processing to be described later.

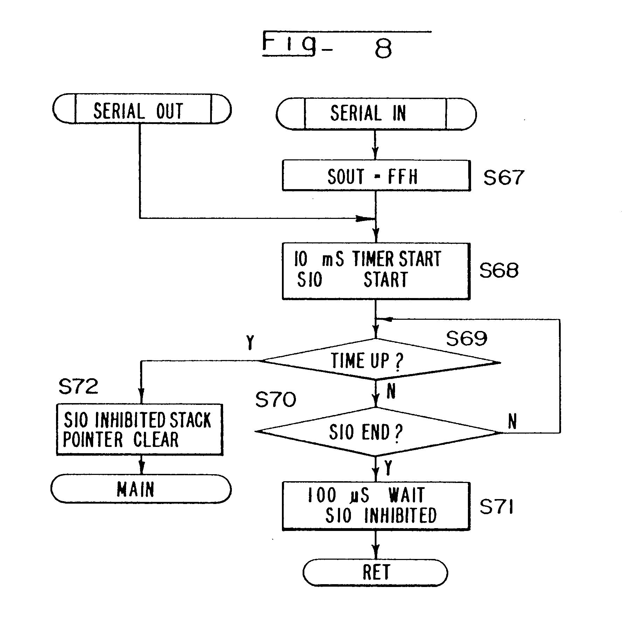

Fig. 8 illustrates in more detail the data input/output process between the camera and the external controller executed in S54, S57 and S63 in the external control process as mentioned above.

First, in case of the serial signal input process "Serial IN" at S54 and S57, the serial output data is set to FFH at S67, and the main CPU 100 sets a 10 ms timer in S68 to permit (start) serial input/output operation.

In case of the serial output process "Serial OUT" in S63, the main CPU 100 sets the 10 ms timer at S68 and permits output of the serial output data set at S51.

S69 checks for time up of the timer and if the timer is not up, it is examined in S70 whether or not the serial input/output has been finished. If the input/output is finished before time up, the main CPU 100 stops the process for 100 µs at S71 and inhibits the serial input/output, then returning to the External Control Flow.

If the time is up before finishing the input/output, the serial input/output is inhibited at S72, while a stack pointer is cleared to restore the nesting level of the subroutine, the process then returning to the main flow.

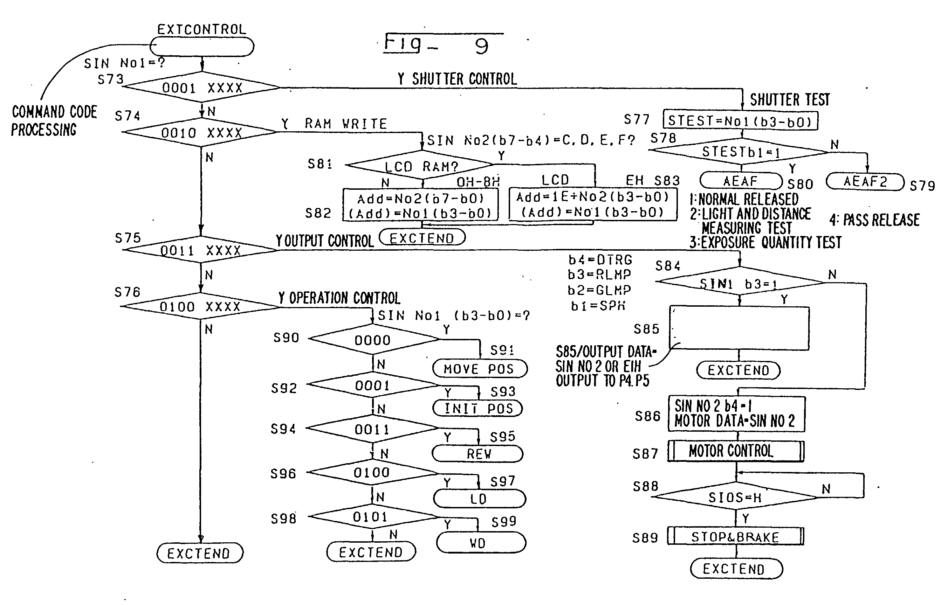

Fig. 9 shows the Command Code process which is executed by the signal actually received from the external controller. This flow will be described with reference to Table 3.

S73 through S76 in this flow check the higher-order 4 bits of the first serial signal SIO IN 1. They are checked successively from high-order to low-order to allow the CPU 100 to determine which of the four stages of control shown in Table 2 is requested by the external controller for the camera.

First, the value 1H of the higher order 4 bits (S74) indicates the case where Shutter Control Processing is requested. In this case, the lower order 4 bits of the first serial signal are to be stored in the STEST register.

It is examined at S77 whether or not bit 1 of the above 4-bit data is 1. Bit 1 is turned to 0 in response to a command to effect shutter-release without performing light and distance measurements, as shown in the shutter control column in Table 3. In this case, the process diverges at S79 to the AEAF2 Flow which effects shutter-release only. If bit 1 is 1, it goes to the AEAF Flow. In this flow, bit 0 and bit 2 of STEST are checked, though detailed description of the AEAF Flow is omitted herein. If bit 0 is 1, the process returns to the main flow after executing light and distance measurements without effecting shutter-release. If bit 2 is 1, the shutter-release is effected regardless of the status of the release switch SWR, ignoring strobe control processing and release lock processing, so as to conduct an exposure quantity test to be mentioned later.

If the result at S73 is negative, it is examined in S74 whether or not the higher order 4 bits of the first serial signal are 2H. If the result is affirmative, the RAM WRITE process is executed.

The address in the RAM at which the data is to be written is represented by a three-digit hexadecimal number and is determined by 8 bit data of the second serial signal.

The second serial signal SIO IN 2 is within the range between OOH and FFH. If the higher order 4 bits are 0 through B, that is OOH through BFH, the address in question is given within the range between OOOH and OBFH with the highest order digit set at 0.

If the higher order 4 bits of the second serial signal SIO IN 2 are CH through FH, the higher 2 digits are fixed at 1E, while the lowest order digit is determined by the lower 4 bits of the second serial signal SIO IN 2, so that the address is specified within the range of 16, i.e., between 1EOH and 1EFH. This range is provided to store data for driving the LCD panel.

The process steps S81 through S83 represent specifying the address mentioned above. It is first examined in S81 whether or not the address specified by the higher order 4 bits of the second serial signal is within the data area for driving the LCD panel. If it is negative, the data sent by the lower order 4 bits of the first serial signal is written into the address specified by the 8 bit of the second serial signal. In S83, the data sent by the lower order 4 bits of the first serial signal is written into the address specified in the range between 1EOH to 1EFH.

Upon completion of writing, the process goes in each case to S66 of External Control mentioned above, at which it is checked whether the control is to be executed again.

At S75 it is examined whether or not the higher order 4 bits of the first serial signal SIO IN 1 are 3H, and if it is affirmative, the output control of Table 3 is executed.

At S84, it is first examined whether or not bit 3 of the first serial signal SIO IN 1 is 1. If it is 1, the main CPU 100 gives at S85 outputs to its own PORTS 4 and 5 in accordance with the 4 bit data from bit 4 to bit 1 of the second serial signal. Thereafter, the process goes to S66 for External Control.

Thus, bit 4 controls a date trigger output to the date module, bit 3 turns ON and OFF the red lamp, bit 2 turns ON and OFF the green lamp, bit 1 outputs the SPH signal representing operation start of the sub CPU 200.

If bit 3 of SIO IN 2 is determined to be 0 at S84, bit 4 of the second serial signal is set at 1 in S86 and data of bit 7 to bit 5 and bit 3 to bit 1 is set as motor data shown in Table 2. At S87, forward and reverse rotation processing of the zoom motor and the wind motor are executed in accordance with the data set.

This processing continues until a motor stop and braking is executed at S89 because of the judgement of SIOS="H" at S88. When the motor control processing is completed, the process goes to S66 for External Control in the same manner as mentioned above.

If the answers at S73 through S75 are all negative, it is examined at S76 whether or not the value of the higher order 4 bits of the first serial signal is 4H.

If it is 4H, the operation controls listed in Table 2 start. The processing is to be executed in accordance with the value of the lower order 4 bits of the first serial signal SIO IN 1.

If at S90 the lower order 4 bits of the first serial signal SIO IN 1 are determined as OH, POS moving process "MOVE POS" is executed at S91. This process moves the taking lens 11 to the position corresponding to POS specified by the lower order 4 bits of the second serial signal SIO IN 2.

If the lower 4 bits are determined as 1H at S92, S93 executes the POS initializing process "INT POS". In case that POS's in 15 steps from OH to EH are to be detected by combination of 3 bit codes, the configuration must be such that the same code is shared by multiple POS's. In this case, POS should be counted in response to changes in the codes, with the current POS being constantly held. However, if the main CPU 100 is unable to recognize the current POS for some reason, the taking lens 11 must be moved to the position where the code and POS is in one-to-one correspondence or to the terminal end so that POS can be re-counted. POS initialization is done for this purpose.

It is checked at S94 whether or not the lower 4 bits of the first serial signal is 3H. If so, the rewind process "REW" is executed at S95.

It is then checked at S96 whether or not the lower 4 bits is 4H and at S98 whether or not they are 5H. If the former is the case, the loading process "LD" is executed at S97, while in the latter case, the wind process "WD" is done at S99.

If the judgments at S90 to S98 are all negative, and those at S73 to S76 are all negative, the process goes to S66 External Control.

An inspection unit for inspecting the camera by means of the above explained external control program is now explained. Inspections of the image plane exposure quantity and of the operation of the camera will be described below.

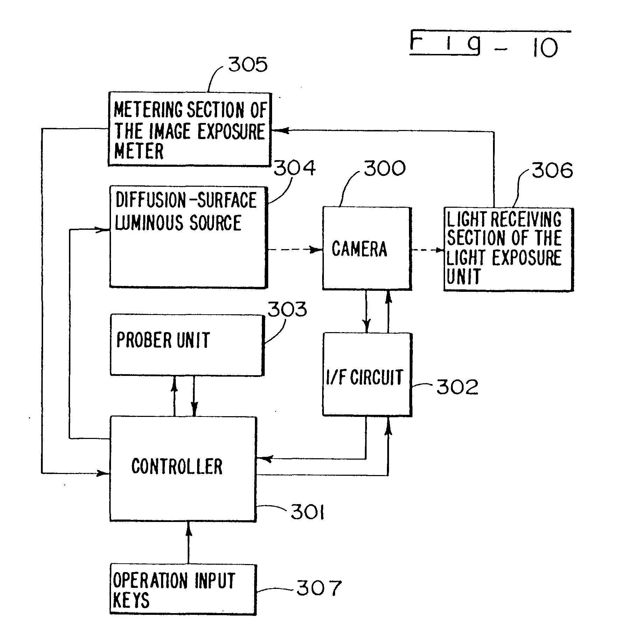

Fig. 10 shows a block diagram of an inspection unit for inspection of an image plane exposure quantity. In Fig. 10, numeral 300 indicates a camera, 301 a controller, 302 an interface (I/F) circuit, 303 a prober unit, 304 a diffusion-surface luminous source of an image plane exposure meter, 305 a metering section of the image plane exposure meter, 306 a light-receiving section of the image plane exposure meter, and 307 operation input keys. For measuring the image plane exposure quantity, the camera is placed exactly opposite to the diffusion-surface luminous source 304, with the light receiving section 306 located in the film plane of the camera 300. The light emission from the diffusion-surface luminous source 304 is controlled to offer a certain range of brightness from the lowest to the highest level. The prober unit 303 is controlled by the controller 301 and interconnects the camera 300 and the controller 301 to perform exchange of information via the interface 302. Camera 300 thus carries out controls following the external control information. The light-receiving section 306 gives an output signal corresponding to the light received to a metering section 305 which in turn gives the measurement result to the controller 301.

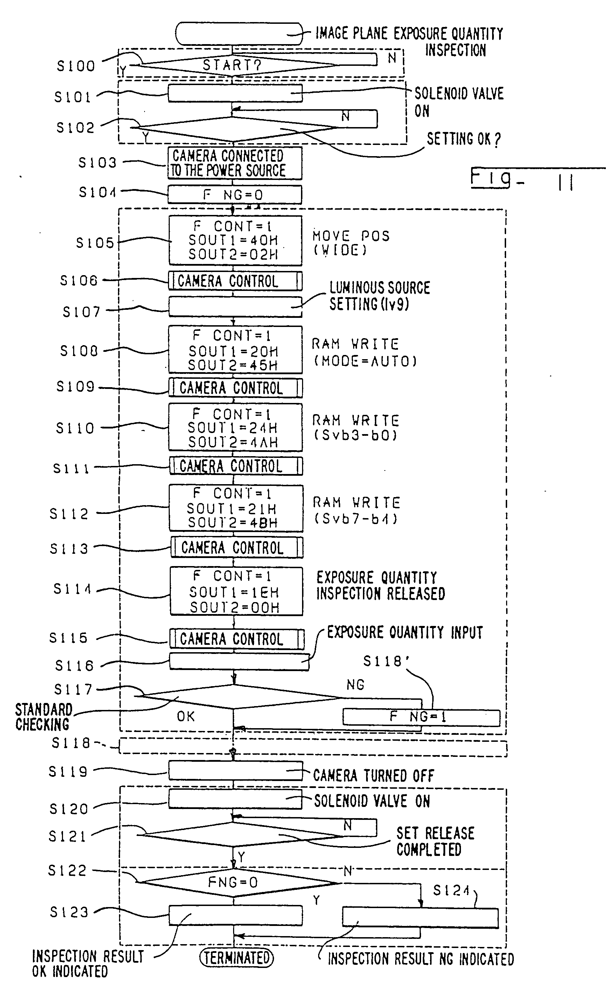

The controller 301 starts, changes and terminates controls in response to the operation of an operation input key set 307 which consists of a START key, a NEXT key and an END key. This controller 301 executes the image plane exposure quantity inspection flow shown in Fig. 11 in response to the actuation of the input key set 307.

When the START key is actuated, the controller 301 gives an answer YES at S100, turning on a solenoid valve of the prober unit 303 (S101) and then checking whether or not the camera 300 is in connection with the controller 301 (S102). Processing for connecting the camera 300 with a power supply unit then takes place and waits for about 1 second until the camera starts its normal operation (S103). A flag FNG is then set to FNG = 0 to check if the camera 300 is acceptable in terms of the image plane exposure quantity (S104). FNG = 0 represents the camera is acceptable, while FNG = 1 indicates the camera is in failure. The flag is set to FNG = 0 at S104 to tentatively treat the camera 300 as an acceptable one.

The controller 301 then goes to S105 to set FCONT = 1, SOUT1 = 40H, SOUT = 02H. FCONT is a flag to check if data should be sent to the camera 300. FCONT = 1 represents the state in which the data is sent to the camera 300, while FCONT = 0 the state in which data is sent from the camera 300 to the controller 301. SOUT 1 stands for data to be sent to the camera 300 in SOI IN 1 processing and SOUT 2 for data to be sent to the camera 300 in SIO IN 2 processing. "40H" is "01000000", and so represents the position move command MOVE POS as seen in Table 2, and "02H" is "00000010" representing the data for moving the zoom lens to POS = 2. That is, data of "40H" and "02H" are commands to move the zoom lens toward the wide extremity.

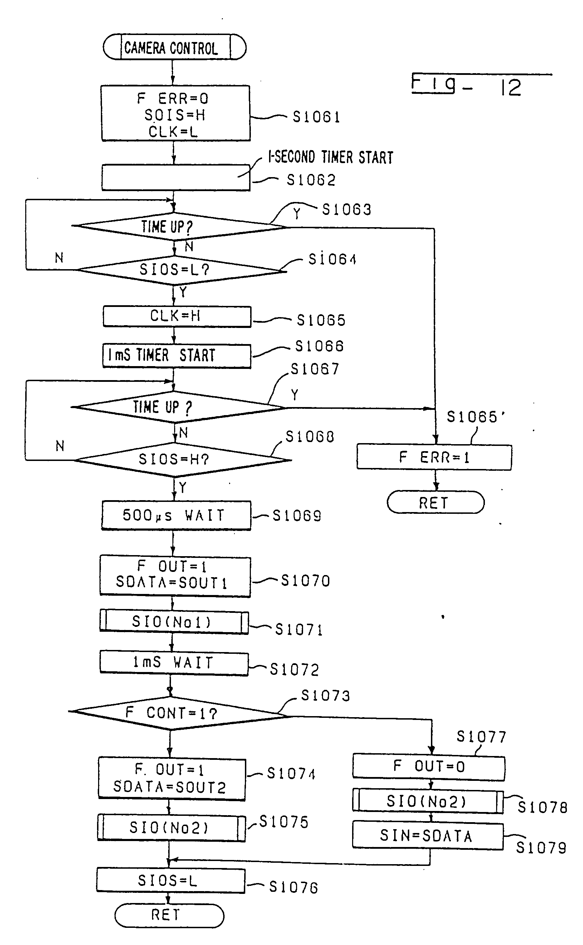

After S105, the controller 301 goes to S106 where the camera control process takes place. This camera control process is executed following the flow chart shown in Fig. 12.

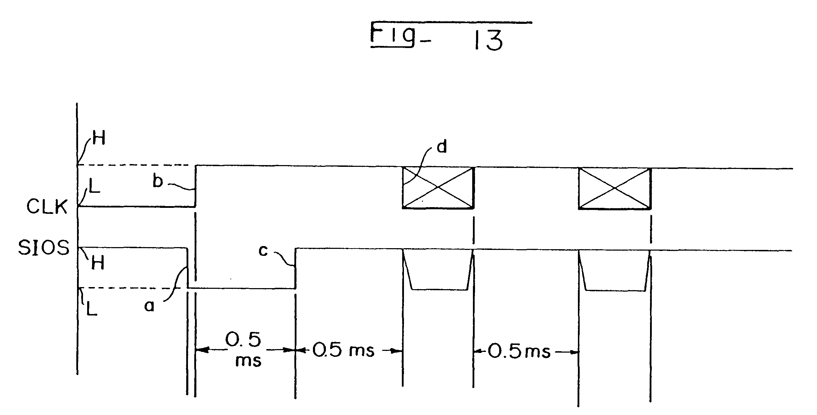

In this camera control processing, flags FERR = 0, SIOS H and CLK = L are first set at S1061, starting a one-minute timer (S1062). Here, flag FERR checks whether or not any error has occurred in the information exchange between the camera 300 and the controller 301. FERR = 1 indicates the occurrence of an error while FERR = 0 indicates no error. When SIOS = H is set in this camera control process, the main CPU 100 of the camera 300 goes to External Control shown in Fig. 7. After the process of waiting for 500 µs in S50, it goes to S51 to check whether or not CLK = L.
Since CLK is set to L in the process of S1061, S51 gives the answer YES, then going to S52. SIOS = 1 is done at S52. Since there is a process of waiting for 500 µs as it goes from S50 to S52, the signal SIOS is turned from "H" to "L" at S52 after 500 µs since CLK = 1 has been set as shown in (a) of Fig. 13. At the same time, SIOS = H is effected at S52 after waiting for 500 µs. On the other hand, the controller 301 checks at S1063 if the time is up, repeats the loop of checking if SIOS = 1 at S1064 and S1065 and waits until SIOS turns to "L". Since SIOS is normally set to "L" in 1 second at S52, the controller 301 gives the answer YES at S1064 and goes to S1065 setting CLK = H. Consequently, CLK is turned to "H" with some delay after SIOS gets "L" as shown in (b) of Fig. 13. If SIOS = L does not come out after 1 second, occurrence of an error is assumed so that the process goes to S1065 setting FERR = 1, then going to S107. If there is no error occurred, on the other hand, the answer YES is given in S57 of External Control in the camera 300, so that the process goes to S54 where it is ready to execute the SIO IN 1 processing.

The controller 301 then goes to S1066 starting the 1 ms timer, and checks if the time is up and if SIOS = H at S1067 and S1068. If SIOS is not "H", S1067 and S1068 are repeated. In the meantime, SIOS = H is set in the External Control in the camera 300 after waiting for 500 µs S52. As a result, SIOS is turned to "H" in 500 µs after it gets L as shown in (c) of Fig. 13. When the time is up to give the answer YES in S1067 during S1067 and S1068 of the camera control process, FERR = 1 is set and the process goes to S107. Since SIOS = H is usually set in 1 ms, the answer YES is given to go to S1069 where the process stops for 500 µs, then going to S1070.

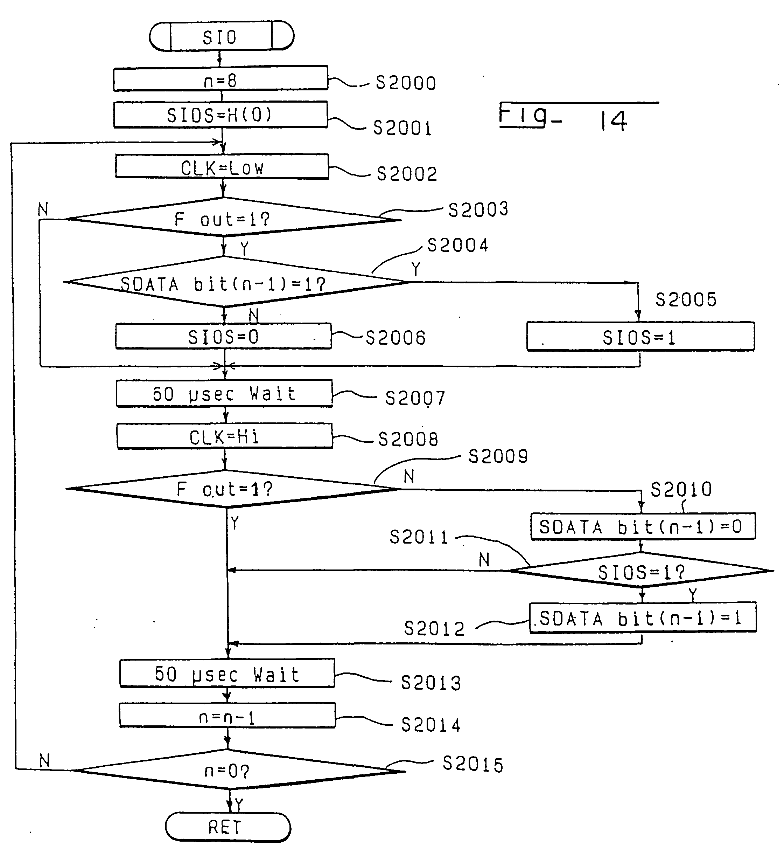

The controller 301 executes setting of FOUT = 1 and DATA = SOUT1 at S1070 then going to S1071. In S1071, the serial IO call process (SIO) takes place as shown in Fig. 14.

In the SIO call process, n = 8 is set at S2000 and the process goes to S2001 where SIOS = H is set, then going to S2002. CLK = L is then set at S2002, then going to S2003. Here CLK is turned from "H" to "L" as shown in (d) of Fig. 13 because of the first setting of CLK = L at S2002. It is checked at S2003 whether or not flag FOUT = 1 holds. If FOUT = 1 at S2003, the process goes to S2004 to check if SDATA bit (n - 1) = 1. Since n = 8 here, the data at bit 7 is checked. If the bit 7 data is "0", the process goes to S2006, while if it is "1", it goes to S2006. The bit 7 data "1" or "0" is thus transferred. The controller 301 then goes to S2008 after waiting for 50 µs at S2007. After setting of CLK = H at S2008, the process goes to S2009. It is checked at S2009 whether or not FOUT = 1. If the answer is yes at S2009, the process goes to S2010, and if no, to S2011. After waiting for 50 µs in S2010, the process goes to S2014 where n = n - 1 is executed, then going to S2015 to check if n = 0. With n = 6 given when the first process is complete, the process goes to S2002 to set CLK = L again. Output of the data of at bit 6 is thus executed in this process.

Repeating this process 8 times, the answer yes is given in S2015, whereby the 8 bit data is transferred from the controller 301 to the camera 300. The controller 301 thus terminates this process, then going to S1072. After waiting for 1 ms at S1072, the process goes to S1073.

With FOUT = 0, the answer NO is given in S2003 so that S2004, S2005 and S2006 are skipped over to go to S2007 to wait for 50 µs. After setting CLK = H at S2008, the process goes to S2009 and then to S2010 to check if FOUT = 1. At S2010, setting of SDATA bit (n - 1) = 0 takes place, which is followed by S2011 where whether SIOS = or not is examined. If the answer YES is given in S2011, the process goes to S2013 after S2012, while if the answer is NO, it directly goes to S2013. In S2012, SDATA bit (n - 1) = 1 is set. Thus, 1-bit data is sent to the controller 301 when steps S2010 to S2012 are executed. Repeating these steps n = 8 times, 8-bit data is received by the controller 301.

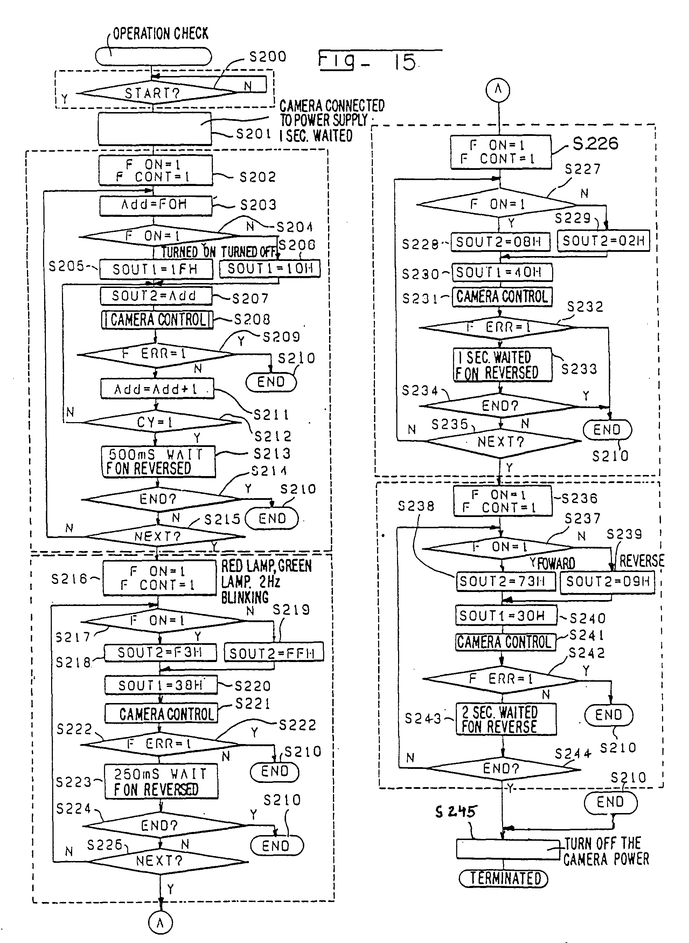

S1073 checks if FCONT = 1. Since the data is here sent to the camera 300, FCONT = 1 holds so that the answer YES is given in S1073. The process thus goes to S1074 to execute setting FOUT = 1 and SDATA = SOUT 2. The controller 301 then goes to S1075 to call SIO again. Thus, the SIO process shown in Fig. 15 is again executed to send data to the camera 300. After sending the command code and data to the camera 300, the process goes to S1076 where SIOS = is set, and to S107. If the answer NO is given in S1073, the process goes to S1077 to set FOUT = 0, then to S1078. SIO is called at S1078 which is followed by S1079. SIN = SDATA setting is executed in S1079. The data is sent from the camera 300 to the controller 301 by means of steps S1077 to 1078.

In S107, light intensity adjustment for the luminous source 304 is carried out. With the luminous source 304 set to the light value LV = 9, the process goes to S108. FCONT = 1, SOUT1 = 20H and SOUT2 = 45H are set in S108. Here, 20H is RAM WRITE as seen from Table 3, and 45H specifies an address, whereby Add = 045H is specified. The data "dddd" is thus written into this Add = 045H. This data is dddd = 0000 which represents the the camera mode is set to an auto mode. Thereafter, the controller 301 goes to camera control shown in Fig. 12 (S109). A data "0000" is written into Add = 045H of the camera RAM by means of this camera control processing.

The controller 301 then goes to S110 where settings of FCONT = 1, SOUT1 = 24H and SOUT = 4AH are executed. This is done to write a data 4H into Add = 04AH. The process then goes to camera control in S111 where the ISO sensitivity information is written into the camera 300. The data corresponding to the lower bits 3 to 0 is written in this process. In S112, FCONT = 1, SOUT1 = 21H and SOUT = 4BH are set. This is done to write a data "1H" into Add = 04BH. The controller 301 likewise goes to S113 to execute the camera control process. The data corresponding to the higher bits 7 to 4 is thus sent to the camera 300, and its contents are written into the RAM of the camera 300.

S114 executes the settings FCONT = 1, SOUT1 = 1EH, and SOUT2 = OOH. "1EH" is "00011110" which corresponds to an exposure quantity test command. The controller 301 then goes to S115 where the camera control process is executed. The release command is thus set to the camera 300. At S116 the exposure quantity input process takes place. The controller 301 compares the exposure quantity input data with an inspection standard and, if it complies with the standard, executes the same process with changing the settings of the light values and the ISO sensitivity. When the answer NO is given at S116, FNG = 1 is executed at S118' to perform the exposure quantity inspection on conditions specified by other standards (S118).

When exposure quantity inspection is completed in all the conditions specified by the standard, the controller 301 goes to S119 to turn the power supply of the camera 300 off. The process then goes to S102 to turn the solenoid valve off so that the prober unit 303 is separated from the camera 300. The process then goes to S122 to examine whether or not the set releasing is completed. After the set releasing, the process goes to S122 to check if FNG = 1. If FNG = 0, the process goes to S123 to execute the indication of the inspection result OK, while if FNG = 1, it goes to S124 to indicate that the inspection result is NG.

This completes the exposure quantity inspection.

The operation inspection is now described with reference to Fig. 15.

S200 first examines whether or not the START key has been depressed. If the START key is found pressed at S200, the process for connecting the camera 300 to the power supply unit takes place and goes to S202 after waiting for one second. Settings FON = 1 and FCONT = 1 are executed at S202. Here, FON = 1 stands for turning the LCD panel 32 on and FON = 0 for turning the LCD panel off. After S202, the controller 301 executes setting Add = FOH at S203, then going to S204. It is checked at S204 whether or not FON = 1. If the answer YES is given in S204, the process goes to S205, while if NO, it goes to S206. Setting of SOUT1 = 2FH is executed at S205 which is followed by the setting of SOUT1 = 20H at S206.

The controller 301 then goes to S207 to carry out setting SOUT2 = Add, then to the camera control process (S208). The address specified by this process is "1E" and the data to be transferred is determined by the lower 4 bits specified at S205 and S206. These data are sent to the camera 300 in the camera control process. The process then goes to S209 to check if FERR = 1. If there is an error at S209, the end process (S210) follows, while with no error, the process goes to S211 to execute Add = Add + 1.

Carry CY = 1 is then checked at S212. Carry CY is a flag indicating shift-up from the highest order bit of the register, representing 0 if there is not shift-up.

With CY = 0, the process goes to S207 and steps S207, 209, 211, 212 are repeated. When CY = 1 at S212, the process goes to S213. Reversing of FON is executed at S213 after waiting for 50ms. Thus, FON = 0 is set if FON = 1, while if FON = 0,FON = 1 is set. The controller 301 then goes to S214 to check if the END key has been operated. If the answer is YES at S214, the process goes to S210, and if NO, to S215.

S215 examines whether or not the NEXT key was actuated. If the answer is NO at S215, the process goes to S203 to repeatedly blink all the segments of the LCD. If YES is given at S215, the process goes to S216. Settings FON = 1 and FCONT = 1 are executed at S216. The controller 301 then goes to S217 to check if FON = 1. If FON = 1, the process goes to S217 and to S219. In S218, setting SOUT1 = F3H is executed, then going to S220, while setting SOUT1 = FFH is executed at S219 which is followed by S220. The controller 301 then goes to the camera control process at S221. The data output control PORT 5,4 OUT is done by "38H" of SOUT1, "00" at bit 3, bit 2 is determined by SOUT2 = F3H at S218 and "11" at bit 3, bit 2 by SOUT2 = FFH at S219. These data are thus sent to the camera 300 in the camera control process.

S222 checks if FERR = 1. If the answer is YES at S222, the processing goes to S210 and if NO, to S223. At S223, the reversing of FON is executed after waiting for 250 ms in S223, which is followed by S224. At S224, it is checked if the END key has been actuated. If the answer is YES in S224, the process goes to S225 and if NO, to S210. S225 checks if the NEXT key has been operated. If NO, the process goes to S217 with the steps S217 through S225 being repeated. Simultaneous blinkings of the red lamp and of the green lamp are thus repeated at an interval of 2 Hz.

Answer YES is given when the NEXT key is actuated and the process goes to S226, where FON = 1 and FCONT = 1 are set. The controller 301 then goes to S227 to check if FON = 1. If the answer YES is given at S227, S228 is executed, while if the answer is NO in S227, S229 is executed. S228 sets SOUT2 = OBH and S229 sets SOUT2 = O2H.

The controller 301 then goes to S230 to set SOUT1 = 40h, then going to the camera control process. MOVE POS for the operation control is specified by SOUT1 = 40H, POS = B by SOUT2 = OBH and POS = 2 by SOUT2 + O2H. These data are sent to the camera 300 in the camera control process (S231). After S231, S232 checks if FERR = 1. If the answer YES is given at S232, the process goes to S210 to perform the END processing. If the answer is NO at S232, the process for reversing of FON is executed after waiting for 1 second, which is followed by S234 to check if the END key has been actuated. If the answer YES is given at S234, the process goes to S210, while if it is NO, it goes to S235. S235 checks whether the NEXT key has been operated. If the answer is NO at S235, the process goes to S227, repeating the steps S227 to S235. Alternate forward and reverse rotation of the zoom motor are thus repeated to reciprocate the zoom lens between the tele extremity POS = B and the wide extremity POS = 2.

If the answer is YES in S235, the process goes to S236 where FON = 1 and FCONT = 1 are set. The controller 301 then goes to S237 to check if FON = 1. If FON = 1 the process goes to S238, while if FON = 0, to S239. S240 sets SOUT = 30H. Specifying output control. Forward rotation of the wind motor is specified by SOUT2 = 73H, and reverse rotation of the wind motor is specified by SOUT2 = D9H. The controller 301 goes to the camera control process at S241, whereby these data are sent to the camera 300. S242 checks if FERR = 1. If the answer YES is given at S242, the process goes to S210, and if NO, to S243. Reversal of FON is executed after waiting for 2 seconds at S243, then going to S244. S244 checks if the END key was actuated. If the answer is NO at S244, the process goes to S237 repeating the steps S237 to S244. If the END key was not actuated, the execution command to the camera 300 gives data corresponding to forward and reverse rotation at an approximate interval of 2 seconds. If the answer YES is given at S244 where the END key has been operated, the process goes to S245 to turn the power supply of the camera 300 off to terminate the operation inspection.

As has been described above, the camera can be controlled externally in the manner described above so that the main CPU operates in response to external execution commands, thereby facilitating inspection as well as changing the operation contents of the camera.

The above camera has another inspection system addition to the one described above.

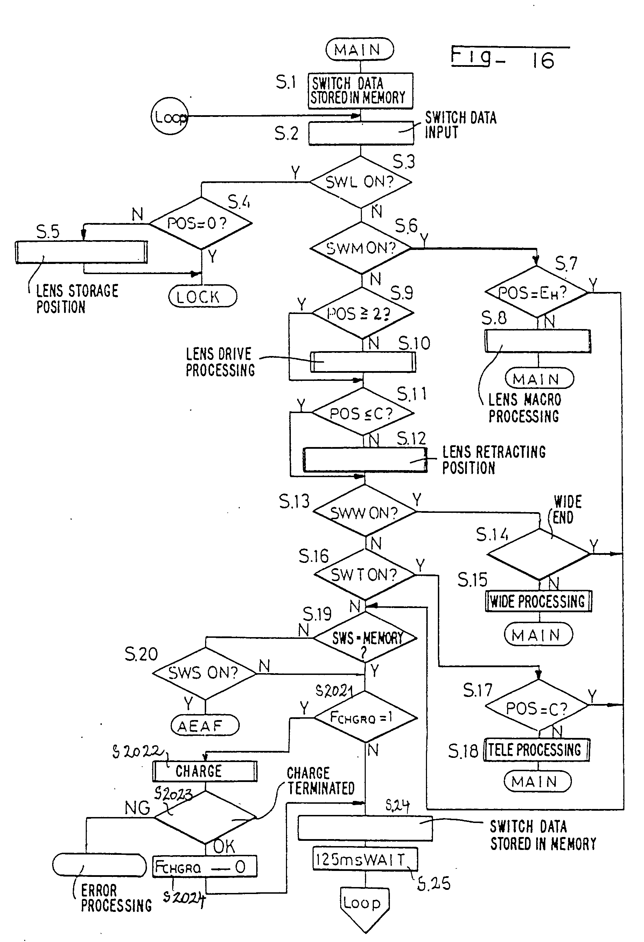

Fig. 16 is a flow chart of the Main Flow of this modified inspection system. It should be noted that only one Main Flow is executed in the above camera 300, and the flow chart illustrated in Fig.16 also discloses the instructions of the first inspection system in a modified form.

In the main flow illustrated in Fig. 16, when there is no change in the status of the photometric switch SWS or when it changes from ON to OFF (S.19), whether battery charging for the strobe 22 is required or not is checked by accessing a battery requirement flag F_{CHGRQ} at S.2021. When this flag is 1, i.e. battery charging is required, the battery charging process is carried out at S.2022 and whether battery charging is completed or not is checked at S.2023

When the result is NG at S.2023, for example, when battery charging is not completed within the scheduled period because the supply voltage is low, the process goes to an error process which is not illustrated. When the result is OK at S.2023, the battery requirement flag F_{CHGRQ} is set to 0 at S.2024 and the process goes to S.24.

In case battery charging is not required at S.2021, the processing directly goes to S.24. The other instructions in this main flow are substantially same as those of Fig. 6.

Next, the AEAF flow which carries out the photometric measurement, the distance measurement and the release system processing which are separated from S.20 of the main flow is explained.

By transferring serial data, this process is carried out with the sub CPU 200 which is described later and therefore the explanation is given while referring to the timing chart in Fig. 21 which shows the flow of both processes.

Data transfer is carried out synchronized with clock CLK (1) - (9) output from the sub CPU 200 as shown in Fig. 21. The transferred data consists of 8-bit serial signals, and their details are explained in Table 4.

Also, in the following explanation, the signal output from the main CPU 100 to SIOA is referred as SA and the signal output from sub CPU 200 to SIOS is referred as SS.

When the process starts, the main CPU 100 switches the power of the sub CPU 200 on by setting SPH to "L" at S.2050, and when the sub CPU 200 is switched on, the main CPU 100 stops processing for 10 ms to avoid noise on the CLK and SIOS signals.

The main CPU 100 detects the level of SIOS at S.2051. When it is "L", the process goes to S.2052. When it is not "L", the main CPU 100 sets SPH to "H" at S.2054 to go to the error process.

At S.2052, by synchronizing with (1) CLK, the main CPU 100 outputs an error code on the SIOA signal line as serial output (1) SA, and inputs the result BCK of the battery check output of the sub CPU 200 from the SIOS signal line as a serial signal (1) SS.

**Table 4**

| No. | SIOA | SIOS | SPH |
|---|---|---|---|
| (1) | Error code | | ⓞ |
| | Table 2 | Battery check | |
| (2) | DATA | DATA | |
| | EXP | AFDATA | |
| (3) | DATA | DATA | ⓞ |
| | POS & Dx | BvDATA | |
| (4) | DATA | | |
| | LLDATA | | |
| (5) | DATA | | |
| | EvDATA | | |
| (6) | DATA | | ⓞ |
| | AvDATA | | |
| (7) | ANUL or REL | | |
| (8) | | RLEXC | |
| (9) | | WIND | |

**Table 5**

| | | |
|---|---|---|
| 40H - 5FH | Serial IO error | |
| 80H - 87H | Zoom code change abnormal | b.2 - 0 = Abnormal code |
| 88H - 8FH | Zoom time-up error | b.2 - 0 = Zoom code |
| 90H - 97H | Telephoto or wide end error | b.2 - 0 = Zoom code |
| 98H - 9FH | Zoom position error | b.2 - 0 = Zoom code |
| COH | Rewind error | |

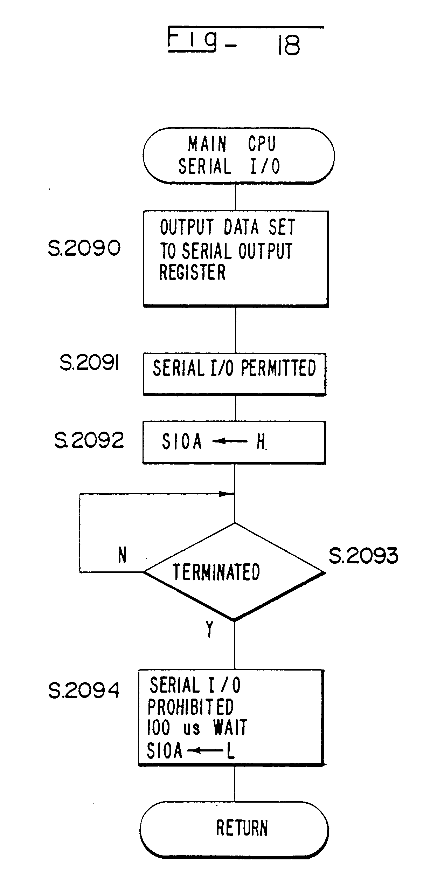

Also, this serial input/output processing is performed by hardware, so in the software of the main CPU, as shown in Fig. 18, an error code is set to the register for serial output at S.2090 first, and then the serial input is enabled at S.2091 and the clock generation in the sub CPU 200 is also enabled when SIOS is set to H at S.2092.

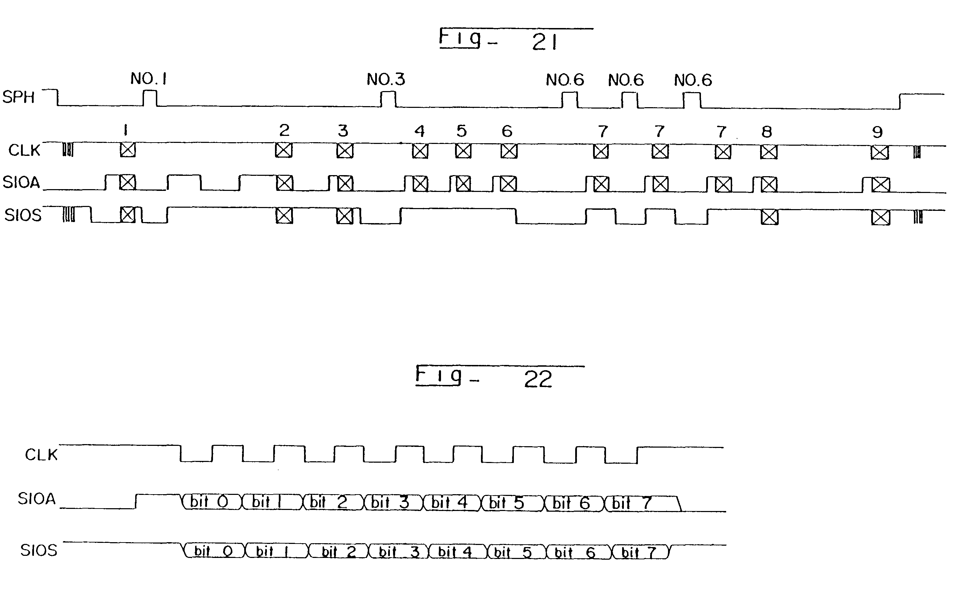

After this, if CLK is input, data is output 1 bit at a time to the SIOA signal line automatically synchronized with CLK, and the data is set 1 bit at a time to the serial input register from the SIOS signal line as shown in Fig. 22. The software in the main CPU 100 waits for the end of the serial input/output at S.2093. When it finishes, the main CPU 100 inhibits serial I/O at S.2094 and sets SIOA to L to read the data from the serial input register as the result of the battery check.

Error codes include the various information shown in Table 5 which are not required to control the sub CPU 200, and by connecting the external unit described later, it can detect the kind of error caused in the camera without any special operation.

The main CPU 100 judges the result of the battery check which is input at S.2053 and goes to error processing via S.2054 when the battery voltage is insufficient to continue the process.

At S.2055, the main CPU 100 outputs an SPH pulse NO.1 of 500 µs to SPH. This pulse has the function to transfer the signal to the sub CPU 200 to carry out the process after the battery check.

At S.2056, the DX code is input from the DX terminal and this code is converted to the ISO sensitivity Sv (Apex display; hereinafter displayed in the same way) of the film.

At S.2057, the lens position code POS is input from the ZC terminal and then by converting this POS, the variation α of the open F number of the focal length for taking photographs which is based on the open F number for wide is acquired.

The main CPU 100 outpus EXP to SIOA as (2)SA at S.2058, and also inputs the distance measurement information AFDATA as (2)SS which the sub CPU 200 outputs to SIOS.

EXP is data showing the accumulated number of photographs taken by the camera, and this data is not required for the sub CPU 200. For example, if 10 pictures are programmed as 1 bit, the data of each 10 pictures between frame 0 and frame 2560 can be output to be monitored outside the camera.

At S.2059, with AFDATA of (2)SS, LL (lens latch) calculation is carried out to acquire the movement amount of the lens out of the camera in Tele direction.

At S.2060, the main CPU 100 outputs the zoom position code POS and the Dx information as (3)SA, and also inputs the subject brightness information BvDATA as (3)SS.

This (3)SA is also data which is not needed by the sub CPU 200, so it is not to be transferred.

At S.2061, AEFM (auto exposure, Flashmatic) calculation processing is called to define the exposure value Ev or diaphragm value Av according to the above data.

At S.2062, whether the battery requirement flag F_{CHGRQ} is 1 or not is checked. When this flag is 1, the main CPU 100 sets SPH = H at S.63, and the signal is transferred to the sub CPU 200 to discontinue processing, and the process goes to the main flow.

At S.2064, SPH pulse NO.3 of 500 µs is output. S.2064 corresponds to transferring the signal to the sub CPU 200 to continue the process.

After SPH pulse NO.3, the main CPU 100 outputs lens latch data LLDATA as (4)SA at S.2065, exposure data AEDATA as (5)SA at S.2066 and Flashmatic data as (6)SA at S.2067 to SIOA.

At S.2068, switch data is input, and according to this data, the following judgments are carried out.

First, whether the release switch SWR is ON at S.2069, photometric switch SWS is ON at S.2070 and lock switch SWL is ON at S.2071 is checked. If the release switch SWR is OFF, the photometric switch SWS is ON and the lock switch SWL is OFF, the main CPU 100 outputs SPH pulse NO.6 at S.2072 and also outputs command ANUL as (7)SA to SIOA at S.2073, then loops between S.2068 and S.2073 till the release switch SWR is turned ON. In this case, the sub CPU 200 will be in the waiting state.

While main CPU 100 process goes into a loop, if the photometric switch SWS is turned OFF or the lock switch SWL is turned ON, the main CPU 100 sets SPH to "H" at S.2074 and then the process goes to the main flow.

When the release switch is ON, the main CPU 100 outputs SHP pulse NO.7 of 500 µs at S.2075 and command REL as (7)SA which is a command for exposure, at S.2076.

Next, the main CPU 100 outputs dummy data (8)SA which has no particular meaning, at S.2077, and also inputs (8)SS which is output from the sub CPU 200, and then judges if (8)SS is a command RLEX to start release or not at S2078.

At S.2079, whether the strobe 22 was flashed for taking a photograph or not is checked. When the strobe 22 was flashed, the battery requirement flag F_{CHGRQ} will be set to 1 to charge the battery at S.2080.

At S.2081, dummy data (9)SA is output and (9)SS is input. At S.2082, whether (9)SS is a command WIND requiring film winding or not is checked. When scheduled commands were not transferred at S.2078 and S.2082, SPH is set to "H" at S.2083, and error processing will be carried out.

When the scheduled commands have been transferred, the main CPU 100 sets SPH to "H" at S.2084, increments the accumulated number of taken photos which was described before, and flows to the winding process to wind the film by one picture.

A detailed explanation of this winding process is not given, however, the process goes to the main flow when winding is correctly finished. When the winding is not completed in the scheduled time, the rewinding process will be carried out.

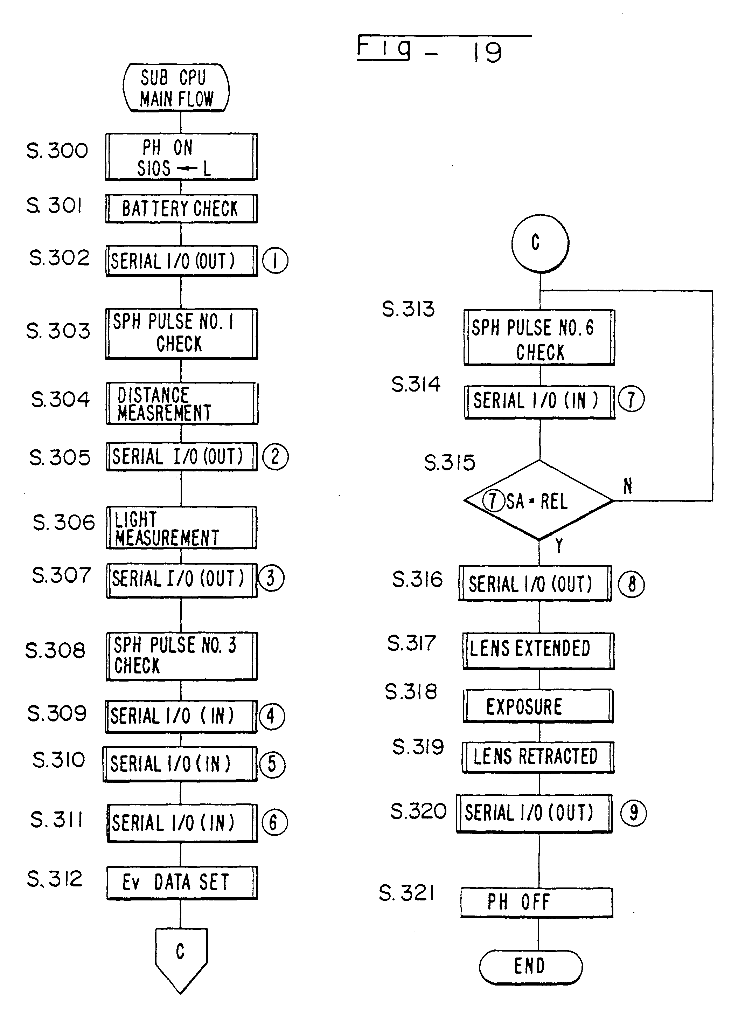

Next, the operation of the sub CPU 200 will be explained according to the flow chart of Fig. 19 and the timing chart of Fig. 21.

When the main CPU 100 sets SPH to "L", the sub CPU 200 performs power hold at S.300 and transfers the signal to inform main CPU 100 that the operation has started by setting SIOS to "L".

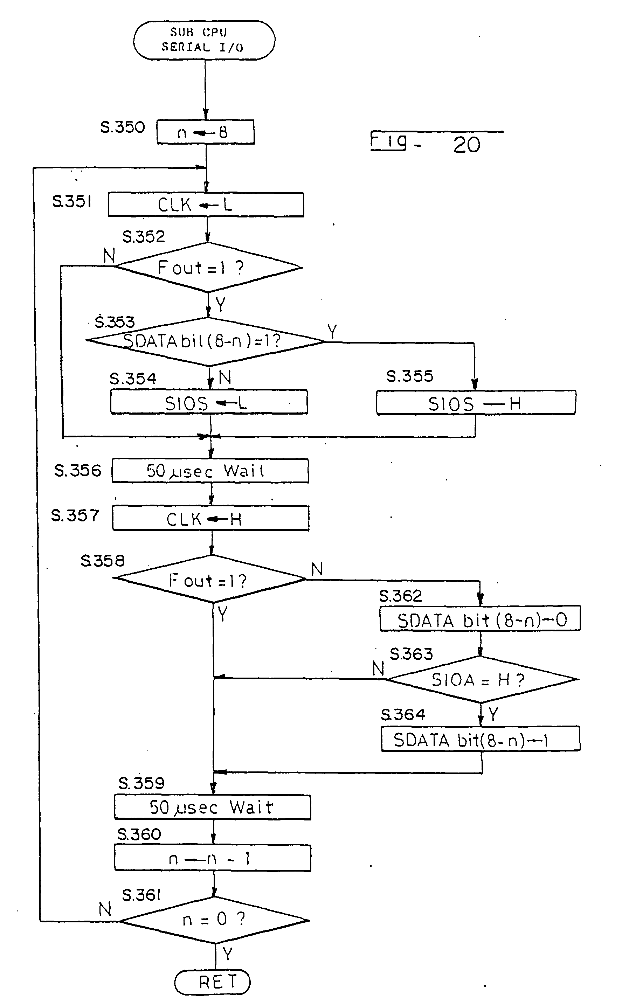

Next, at S.301, the sub CPU 200 checks the voltage of the battery using battery check circuit 220, and outputs the checking results as data (1)SS to SIOS synchronized with the built-in clock (1) CLK at S.302. The timing of clock generation and data input/output is shown in the serial I/O flow of Fig. 20.

In the serial I/O flow of the sub CPU, an n-counter is set to 8 at S.350 and the process goes to S.351. At S.351, CLK is set to "L" from H (Fig. 12) and the process goes to S.352.

At S.352, whether flag F_{OUT} = 1 or not is checked. This flag is set to 1 when the sub CPU 200 outputs data for serial I/O processing and is set to 0 for the input mode.

First F_{OUT}, that is when the sub CPU 200 outputs serial data, is explained.

In this case, the process goes to S.353 and checks if bit (8-n) of the serial output data is 1 or not. At the beginning of this flow, n = 8, therefore, bit 0 of the output data is checked first. When bit 0 of the data is "0", the process goes to S.354 to set SIOS to L. When bit 0 of the data is 1, the process goes to S.355 to set SIOS to H.

With the above processing, data 1 or 0 of bit 0 will be output to SIOS. The sub CPU 200 sets CLK to H at S.357 after interrupting the process for 50 µs at S.356.

At S.358, whether F_{OUT} = 1 or not is checked again. When F_{OUT} is 1, the process goes to S.359, and after interrupting the process for 50 µs at S.359, the process goes to S.360 to subtract 1 from the n-counter and to check if the n-counter is 0 or not at S.362. After one repetition of the above process, n will be 7, so the process returns to S.351 and CLK is set to "L" again. With this processing, the data output of bit 1 will be carried out.

When this process is repeated eight times, the judgment at S.361 will be YES, and then the sub CPU 200 outputs 8 bits of serial data. The sub CPU finishes this serial I/O processing and returns to the main flow to continue the process.

When F_{OUT} = 0, i.e. the sub CPU inputs the serial data, the process skips S.353, S.354 and S.355 and goes to S.356, S.358 and S.362. At S.362, bit (8-n) of the serial input data is set to 0, and whether SIOA is "L" or not is checked at S.363. When SIOA is L, bit (8-n) of the serial input data is changed to 1 at S.364 and the process goes to S.359. When SIOA is H, bit (8-n) is held at 0 and the process goes to S.359.

For the input mode, the above process will be repeated eight times until n = 0, and an 8-bit serial signal will be input to the sub CPU 200.

When the process returns to the main flow of the sub CPU 200, the SPH pulse NO.1 from main CPU 100 will be checked at S.303.

The sub CPU 200 measures the distance to the subject by controlling the distance measurement unit 24 at S.304, and outputs the distance measurement data AFDATA as (2)SS according to the above serial I/O flow synchronized with (2) CLK.

Next, the sub CPU 200 measures the brightness of the subject with the output of the cell 23 at S.306, and also outputs brightness data BvDATA as (3)SS synchronized with (3) CLK at S.307.

At S.308, sub the CPU 200 checks the SPH pulse NO.3.

It outputs (4) CLK at S.309 and also inputs lens latch data LLDATA which is output from the main CPU 100 as (4)SA. It also outputs (5) CLK at S.310 and inputs the exposure data AEDATA which is output from the main CPU 100 as (5)SA. Moreover, it outputs (6)CLK at S.311 and inputs Flashmatic data FMDATA which is output from the main CPU 100 as (6)SA.

At S.312, shutter speed or diaphragm data is set according to the above AEDATA or FMDATA and the process goes to "C".

At S.313, SPH pulse NO.6 is checked.

At S.314, the sub CPU 200 outputs (7)CLK and inputs (7)SA which is output from the main CPU 100. (7)SA is transferred as command ANUL until the release switch is turned ON, and when the release switch is ON, the command REL is superimposed. At S.315, the process repeats between S.313 and S.315 while waiting for this command REL.

When the command REL is transferred, the sub CPU 200 outputs a command RLEXC to (8)SS as well as (8)CLK at S.316, moves the lens to the focal position at S.317 according to the transferred lens latch data, and carries out the exposure control at S.318.

After this, the sub CPU 200 moves the lens back to the initial position at S.319, and outputs the winding request command WIND as to (9)SS as well as (9)CLK at S.320.

Finally, the sub CPU 200 turns the power hold at S.321 OFF to finish the process.

Next, a monitor unit to check the camera is explained.

The monitor unit is constructed with a data reading circuit which has terminals for connection to each of the SPH, SIOA SIOS and CLK contacts, and a display section such as a CRT, etc. which displays data through connection to the reading circuit. In checking the camera, by connecting each terminal to the camera contacts, the data output from the camera can be monitored by operating the camera in the same way as when taking a photograph.

The leading edge of CLK shown in Fig. 22 is the point of the timing to read the data.

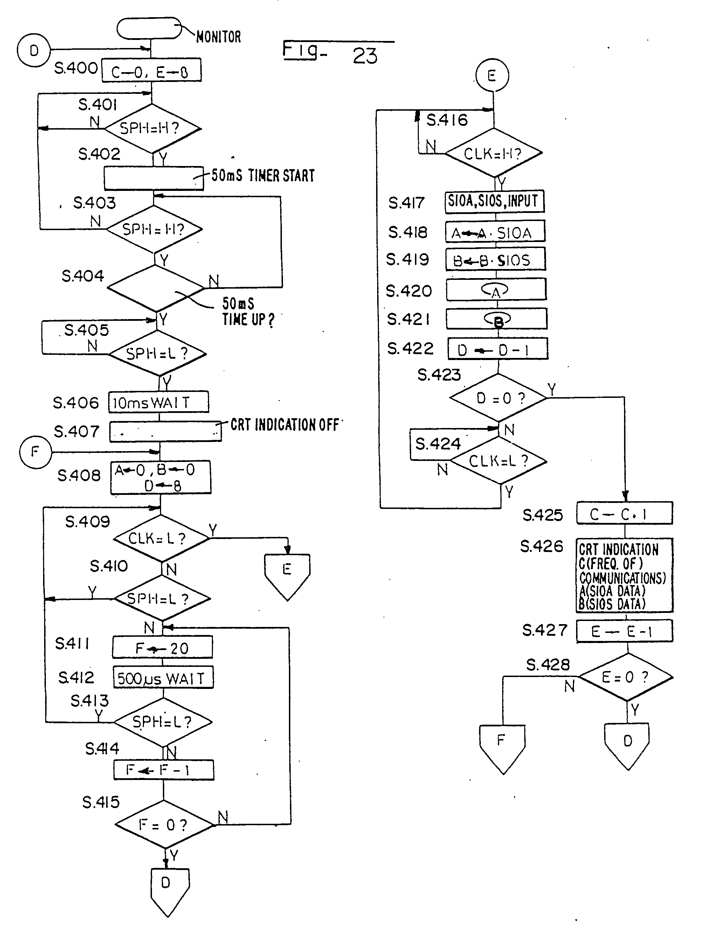

Fig. 23 is a flow chart showing the operation of this monitor unit.

When the process starts, the monitor unit clears the counter C at S.400 which counts and displays the number of times reading data is communicated, and counter E is set to 8 to specify the number of times serial data is to be read.

At S.401, whether SPH is "H" or not is checked. If it is set to "H", the 50 ms timer will start at S.402 and whether SPH is "H" or not is checked again at S.403. If it is "H", if the time is up or not is checked at S.40, and then if SPH is "H" for 50 ms, the process will wait for SPH to become "L" at S.405.

When SPH is "L" from the beginning, or if it is set to "L" during 50 ms, the process returns to S.401 again to continue the process. This process is carried out to avoid the unit starting processing by SPH pulses generated intermittently when the photometric switch is turned ON and OFF continuously. If the processing was started with a SPH pulse, data could not be read from (1) in order, and also the data which is read could not be judged, which can lead to judgment errors.

When it is judged that the shutter button has not been pressed at S.404, the process in the camera starts by turning the photometric switch at S.405 ON, and the process waits for SPH to be set to "L".

When SPH is set to "L", the process is suspended for 10 ms at S.406 to avoid noise interfering with SIOS and CLK. The display on the CRT screen will disappear at S.407.

At S.408, a register A which stores the SA signal and a register B which stores the SS signal are cleared, and a counter D which counts down the SA and SS signals 1 bit at a time is set to 8.

At S.409, whether CLK is "L" or not is checked. When it is "L", the process goes to "E" which will be described later. When it is "H", whether SPH is "L" or not is checked at S.410, and when it is "L", i.e. when the power of the sub CPU 200 is not switched off, the process returns to judgment at S.409 and S.410 until CLK is set to "L".

When SPH is judged to be "H" at S.410, a counter F is set to 20 at S.411. After being suspended for 500 µs at S.412, SPH is checked again to see if it is "L" or not at S.413. When the result is "H", 1 is subtracted from counter F at S.414 and whether counter F is set to 0 or not is checked at S.415. When the process detects that SPH is "H" for more than 10 ms that is 20 times at an interval of 500 µs, it judges that the photographer has released the shutter button, so it returns to "D". By this processing, even if SPH is "H", the process continues when the SPH pulse is superimposed.

Now, when CLK is judged to be "L" at S.409, the data reading unit Judges that the clock output for data transfer is started, and waits for CLK to be initialized and set to "H" at S.416, and when CLK is set to "H", it inputs SIOA and SIOS from the lowest bit at S.417.

At S.418 and S.419, the logical sums of input SA signal and bit 0 of register A, and SS signal and bit 0 of register B are stored as the 0 bit of each register.

At S.420 and S.421, the data of each bit of the counter is shifted to the right by one digit. By repeating this operation for 8 bits, data which is input as serial data can be stored in each register.

At S.422, 1 is subtracted from counter D and whether counter D is set to 0 or not is checked at S.423. This counter D is set to 0 after all serial signals for 8 bits are read.

When not all 8 bits of data have been read, the process waits for CLK to be set to "L" at S.424, and when it is set to "L", the processing between S.416 and S.423 is repeated.

When counter D is set to 0, 1 is added to counter C at S.425, and, for example, counter C (communication times), register A (SIOS) or register B (SIOS) can be displayed on the CRT screen.

At S.427, 1 is subtracted from counter E and whether it is set to 0 or not is checked at S.428. When data specifying the number at S.400 has been read completely, the process returns to "D" again. When data is being read, the processing loops to "F" to continue the process.

In this case, the 8 serial data items corresponding to (1)CLK to (8)CLK of camera for SIOA and SIOS are read and finally displayed.

As described earlier, this camera need not transfer data, but it outputs essential data to judge the condition of the camera in the interval of data transfer with respect to timing, therefore, without special controls, any data can be read by the simple monitor unit described above and operations for each check can be done easily.

As has been described, a data requiring transfer and a data requiring no transfer can be easily monitored by taking such data from signal lines of the camera with no extra control.

Also, with the arrangement for generating the type of errors in the electronic control system, operation abnormalities can be exactly classified to facilitate repairing failure products.

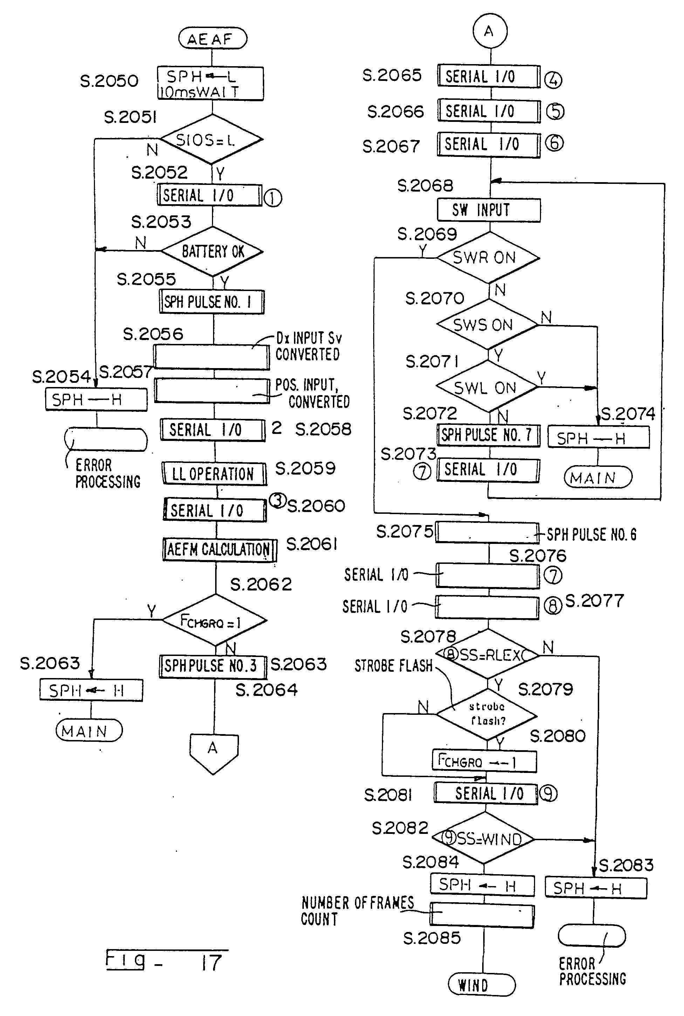

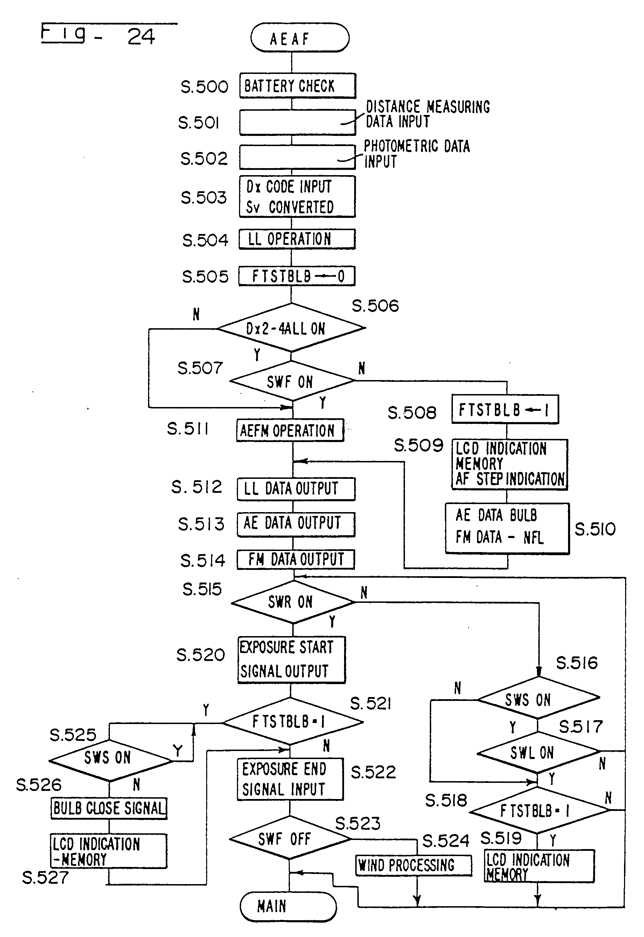

Fig. 24 is an "AEAF" flow diverging from S20 of the Main Flow of Figs. 6 and 16. It should be noted that only one "AEAF" flow is executed in the above camera 300, and the flow chart illustrated in Fig. 24 is to disclose the instructions relating to a further part of the inspection system similar to Fig. 17.

In this system, when the Dx code printed on the film cassette of the loaded film is ISO 3200 and the film switch SWF is ON, that is when a film is not pulled out of the cartridge, the process judges it as the test mode and displays the AF step based on the distance measurement data on the LCD panel. The LCD panel does not display the focal length or frame numbers in the normal mode which is not included in the test mode.

When the process starts, first whether the battery voltage is sufficient to continue processing or not is checked at S.500. When the voltage is above the specified value, distance measurement data based on the detected results of the AF unit is input at S.501. The distance measurement data is converted to one of 36 AF steps from 0.5 m to infinity.

Next, at S.502, the photometric data based on the output of the photometric cell which measured the brightness of the subject is input.

At S.503, the main CPU 100 reads the Dx code of the film cartridge loaded when the Dx contact is connected and recognizes the code as the film ISO sensitivity according to Table 1 and also converts it into a film sensitivity value Sv (apex display).

At S.504, a LL (Lens Latch) calculation to acquire the amount of lens movement is carried out according to the AF step which is determined to correspond to the distance measurement data. The AF step is decided according to the distance measurement data, however, for the same AF step, the value of the lens latch will be different when the taking lens is in the normal mode or the macro mode, so it is decided after considering this information.

At S.505, a test flag F_{TSTBLB} which shows that the process is in the test mode is cleared.

At S.506, whether the Dx code input at S.503 corresponds to ISO 3200, that is if all Dx contacts were turned ON, or not is checked.

At S.506, when an ISO 3200 film cartridge is judged to be loaded, whether the film switch SWF is OFF or not is checked at S.507. When this switch is ON, that is when the film is not pulled out of the cartridge, the test flag F_{TSTBLB} is set at S.508, and the data presently displayed on the LCD panel is stored in a memory as backup data, and the AF step is displayed as the distance measurement data.

The above two conditions are required for the process to go to the test mode, however, ISO 3200 film is rarely used by users of compact cameras, and even when they use it, the film has to be pulled out. In this case the test mode will not be set, so there is no chance of the test function interfering with taking photographs.

In testing, whether the operation of the photometric unit is normal or not can be checked easily by simply preparing an ISO 3200 film cartridge.

At S.510, AE data to control the shutter speed is set to the bulb exposure mode, and the Flashmatic (FM) data is set to NFL which inhibits the flash. The bulb exposure mode means to open the shutter when the shutter button is pressed and to close it when the shutter button is released.

When an ISO 3200 film cartridge is not loaded or a film cassette other than ISO 3200 is loaded at S.506, AEFM calculation processing will be carried out at S.511 without any judgment at S.507.

Also, even if an ISO 3200 film cartridge is loaded, the test mode does not start and AEFM processing will be carried out when the film is pulled out.

When the exposure value is sufficient and does not require strobe emission, the shutter speed and the diaphragm value are determined according to the AE calculation at S.511.

The main CPU 100 transfers LL data, AE data and FM data calculated at S.512, S.513 and S.514 to sub the CPU 200.

At S.515, whether the release switch SWR is ON, whether the photometric switch SWS is ON at S516 and whether the lock switch SWL is ON at S517 are checked. Then, when the photometric switch SWS is ON and the lock switch is OFF, the process goes into a loop between S.515 and S.517 until the release switch SWR is turned ON. When the release switch SWR is turned ON, the exposure start signal is output to the sub CPU 200 at S.520.

When the photometric switch SWS is OFF and the lock switch SWL is ON, whether test flag F_{TSTBLB} is 1 or not is checked at S.518. When it is in the test mode, the LCD panel display is changed over from the AF step to the normal display is held in a memory at S.519. When it is not in the test mode, the process skips S.519 and goes to the main flow.

When the release switch SWR is turned ON while the photometric switch SWS is ON and the lock switch SWL is OFF, the main CPU 100 outputs an exposure start signal to the sub CPU 200 at S.520. When this signal is input to the sub CPU 200, the lens is moved to the focus position according to the LL data, and the diaphragm and the shutter speed are set according to the AE data, or the diaphragm and the strobe are set according to the FM data and the shutter is opened.

At S.521, whether test flag F_{TSTBLB} is 1 or not is checked. When this flag is 0, the main CPU 100 inputs the exposure end signal at S.522 and checks if the film is pulled out at S.523. When the film is pulled out, winding to transport the film by one frame is carried out at S.524.

Also, a detailed explanation of this winding process will not given, however, when the winding is completed correctly, the process goes to the main flow, and when the winding is not completed within the scheduled time, the process for winding will be carried out.

Now, when the test flag F_{TSTBLB} is 1 at S.521, i.e. the process is in the test mode, the judgment at S.525 is repeated until the photometric switch SWS is turned OFF. During this processing the shutter is open. Therefore, by opening the rear cover and positioning a frosted glass at the aperture, the picture can directly be seen.

When pressure is released from the shutter button, the bulb close signal is output at S.526, and the LCD panel display is changed over to the information backed up in the memory, and the process goes to S.522.

In the above example, the distance measurement unit is only described concerning the distance measuring method, however, some other methods can be used; for example, displaying photometric unit data which measures the brightness of the subject.

As has been described above, according to the third inspection system, measurement data such as light intensity and distance can be easily monitored by setting a test mode as part of the normal operation of the camera with out the need of using an external inspection unit etc.

Furthermore, since the test mode is entered dependent on the status of the Dx code and a film switch, testing can be accomplished without disturbing the user in photographing.

## Claims

1. An electronically controlled camera comprising:
- measuring means (23, 24) for measuring photographing data varying in dependence on external environment conditions;
- display means (32) for displaying said photographing data;
- Dx code input means (Dx1-Dx4) for reading a Dx code provided on a film cartridge; and
- control means (100, 200) for determining whether the camera is in its normal photographic mode or in a test mode, and if in the test mode, displaying said photographing data measured by said measuring means (23, 24) on said display means (32), so as to allow monitoring of photographing data not displayed in the normal mode;
**characterized** by
- film detecting means (SWF) for checking if a film is loaded with its front end drawn out of the film cartridge;
wherein said control means (100, 200) determine that the camera is in the test mode when said Dx code input means (Dx1-Dx4) inputs a predetermined Dx code and said film detecting means (SWF) detects that the film is not drawn out of the film cartridge.

2. The electronically controlled camera according to claim 1 wherein said photographing data measured by said measuring means (23, 24) comprises the subject-distance.

3. The electronically controlled camera according to claim 1 or 2 wherein said predetermined Dx code is a code for the film which is not employed in usual photographing.

4. The electronically controlled camera according to claim 1, 2 or 3 wherein said predetermined Dx code is the code for ISO 3200.

5. An electronically controlled camera according to any one of the foregoing claims comprising:
control means (100, 200) for controlling camera functions;
input means (28) for inputting a control signal to said control means (100, 200), and
terminal means, to which an external controller can be connected for inputting an external control signal to said control means (100, 200);
wherein said control means (100, 200) disables said input means when said external control signal is input through said terminal means and controls said camera function in accordance with said external control signal via said control means (100, 200).

6. The electronically controlled camera according to claim 5 wherein said camera function comprises at least one of automatic focusing, automatic exposure, automatic film loading, automatic film rewinding, zooming and photographing information indication.

7. The electronically controlled camera according to claim 5 or 6 wherein said input means comprises a shutter button (28).

8. The electronically controlled camera according to claim 5, 6 or 7 wherein said control means (100, 200) comprises first (100) and second (200) control units, a plurality of signal lines (SPH, SIOA, SIOS, CLK) being interconnected between said first and second control units (100, 200), and wherein said terminal means comprises at least one electric terminal connected to a specific one (SIOA) of said signal lines (SPH, SIOA, SIOS, CLK), which is used for test data transmission from said first control unit (100) to said electric terminal when said second control unit (200) transmits data to said first control unit (100) via signal lines (SPH, SIOS, CLK) other than said specific signal line (SIOA).

9. The electronically controlled camera according to claim 8 wherein said predetermined data comprises data relating to kinds of errors occured in electronic control systems of the camera.

## Patentansprüche

1. Elektronisch gesteuerte Kamera mit
- Meßmitteln (23, 24) zum Messen fotografischer Daten, die abhängig von äußeren Umgebungsbedingungen variieren;
- Anzeigemittel (32) zum Anzeigen der fotografischen Daten;
- Mitteln zur DX-Codeeingabe (Dx1-Dx4) zum Lesen eines DX-Codes auf einer Filmpatrone; und
- Steuermitteln (100, 200) zum Bestimmen, ob die Kamera in ihrem Normalaufnahmemodus oder in einem Testmodus ist, und zum Anzeigen der von den Meßmitteln (23, 24) gemessenen fotografischen Daten auf den Anzeigemitteln (32), wenn die Kamera in dem Testmodus ist, um das Überwachen von in dem Normalaufnahmemodus nicht angezeigten fotografischen Daten zu ermöglichen;
**gekennzeichnet** durch
- Filmerfassungsmittel (SWF) zum Prüfen, ob ein Film mit aus der Filmpatrone herausgezogenem vorderen Ende eingelegt ist;
wobei die Steuermittel (100, 200) bestimmen, daß die Kamera in dem Testmodus ist, wenn das Mittel zur DX-Codeeingabe (Dx1-Dx4) einen vorbestimmten DX-Code eingibt und das Filmerfassungsmittel (SWF) erfaßt, daß der Film nicht aus der Filmpatrone herausgezogen ist.

2. Elektronisch gesteuerte Kamera nach Anspruch 1, wobei die von den Meßmitteln (23, 24) gemessenen fotografischen Daten die Objektentfernung enthalten.

3. Elektronisch gesteuerte Kamera nach Anspruch 1 oder 2, wobei der vorbestimmte DX-Code ein Code für den nicht in der üblichen Fotografie verwendeten Film ist.

4. Elektronisch gesteuerte Kamera nach Anspruch 1, 2 oder 3, wobei der vorbestimmte DX-Code der Code für ISO 3200 ist.

5. Elektronisch gesteuerte Kamera nach einem der vorhergehenden Ansprüchen mit:
Steuermitteln (100, 200) zum Steuern von Kamerafunktionen;
Eingabemitteln (28) zum Eingeben eines Steuersignals an die Steuermittel (100, 200), und
Anschlußmitteln, an die eine externe Steuerung zum Eingeben eines externen Steuersignals an die Steuermittel (100, 200) anschließbar ist;
wobei das Steuermittel (100, 200) das Eingabemittel ausschaltet, wenn das externe Steuersignal durch die Anschlußmittel eingegeben wird, und die Kamerafunktion in Abhängigkeit von dem externen Steuersignal über das Steuermittel (100, 200) steuert.

6. Elektronisch gesteuerte Kamera nach Anspruch 5, wobei die Kamerafunktion zumindest eine der folgenden Funktionen ist: automatische Scharfeinstellung, automatische Belichtung, automatisches Filmladen, automatisches Rückspulen, Zoomen und Anzeigen fotografischer Informationen.

7. Elektronisch gesteuerte Kamera nach Anspruch 5 oder 6, wobei das Eingabemittel einen Auslöser (28) hat.

8. Elektronisch gesteuerte Kamera nach Anspruch 5, 6 oder 7, wobei das Steuermittel (100, 200) eine erste (100) und eine zweite (200) Steuerung enthält, wobei mehrere Signalleitungen (SPH, SIOA, SIOS, CLK) zwischen der ersten und der zweiten Steuerung (100, 200) angeschlossen sind und das Anschlußmittel zumindest einen elektrischen Anschluß hat, der mit einer bestimmten (SIOA) der Signalleitungen (SPH, SIOA, SIOS, CLK) verbunden ist, die zum Übertragen von Testdaten von der ersten Steuerung (100) an den elektrischen Anschluß dient, wenn die zweite Steuerung (200) Daten an die erste Steuerung (100) über eine andere Signalleitung (SPH, SIOS, CLK) als die bestimmte Signalleitung (SIOA) überträgt.

9. Elektronisch gesteuerte Kamera nach Anspruch 8, wobei die vorbestimmten Daten solche Daten enthalten, die in elektronischen Steuersystemen der Kamera aufgetretene Fehlerarten betreffen.

## Revendications

1. Appareil photo à commande électronique comprenant :
un moyen (23, 24) de mesure destiné à mesurer des données de photographie variant en fonction de conditions de l'environnement externe ;
un moyen (32) d'affichage destiné à afficher lesdites données de photographie ;
un moyen (Dx1 à Dx4) d'entrée de code de Dx destiné à lire un code de Dx prévu sur une cartouche de film ; et ;
un moyen (100, 200) de commande destiné à déterminer si l'appareil photo est dans son mode normal de photographie ou dans un mode essai, et s'il est en mode d'essai, à afficher, sur ledit moyen (32) d'affichage, lesdites données de photographie mesurées par ledit moyen (23, 24) de mesure, de façon à permettre l'examen de données de photographie non affichées en mode normal ;
caractérisé :
par un moyen (SWF) de détection de film destiné à vérifier si un film est chargé avec son extrémité avant extraite de la cartouche de film ;
dans lequel ledit moyen (100, 200) de commande détermine que l'appareil photo est en mode essai lorsque ledit moyen (Dx1 à Dx4) d'entrée de code de Dx entre un code de Dx prédéterminé et que ledit moyen (SWF) de détection de film détecte que le film n'est pas extrait de la cartouche de film.

2. Appareil photo à commande électronique selon la revendication 1, dans lequel lesdites données de photographie mesurées par ledit moyen (23, 24) de mesure comprennent le tirage optique objet.

3. Appareil photo à commande électronique selon la revendication 1 ou 2, dans lequel ledit code de Dx prédéterminé est un code pour le film qui n'est pas employé en photographie usuelle.

4. Appareil photo à commande électronique selon la revendication 1, 2 ou 3, dans lequel ledit code de Dx prédéterminé est le code pour ISO 3200.

5. Appareil photo à commande électronique selon l'une quelconque des revendications précédentes, comprenant :
un moyen (100, 200) de commande destiné à commander des fonctions d'appareil photo ;
un moyen (28) d'entrée destiné à entrer un signal de commande dans ledit moyen (100, 200) de commande ; et
un moyen formant borne, auquel un régisseur externe peut être connecté pour entrer un signal externe de commande dans ledit moyen (100, 200) de commande ;
dans lequel ledit moyen (100, 200) de commande désactive ledit moyen d'entrée lorsque ledit signal externe de commande est entré par l'intermédiaire dudit moyen formant borne, et commande ladite fonction d'appareil photo en fonction dudit signal externe de commande par l'intermédiaire dudit moyen (100, 200) de commande.

6. Appareil photo à commande électronique selon la revendication 5, dans lequel ladite fonction d'appareil photo comprend au moins l'une de la mise au point automatique, l'exposition automatique, le chargement automatique de film, le rembobinage automatique de film, le changement de plan (zooming) et l'indication d'information de photographie.

7. Appareil photo à commande électronique selon la revendication 5 ou 6, dans lequel ledit moyen d'entrée comprend un bouton (28) d'obturateur.

8. Appareil photo à commande électronique selon la revendication 5, 6 ou 7, dans lequel ledit moyen (100, 200) de commande comprend des premier (100) et second (200) modules de commande, une pluralité de lignes (SPH, SIOA, SIOS, CLK) de signal étant interconnectée entre lesdits premier et second modules (100, 200) de commande, et dans lequel ledit moyen formant borne comprend au moins une borne électrique connectée à l'une, spécifique, (SIOA) desdites lignes (SPH, SIOA, SIOS, CLK) de signal, qui est utilisée pour la transmission de données d'essai dudit premier module (100) de commande à ladite borne électrique lorsque ledit second module (200) de commande transmet des données audit premier module (100) de commande par l'intermédiaire des lignes (SPH, SIOS, CLK) de signal autres que ladite ligne spécifique (SIOA) de signal.

9. Appareil photo à commande électronique selon la revendication 8, dans lequel lesdites données prédéterminées comprennent des données se rapportant à des types d'erreurs apparues dans les systèmes de commande électronique de l'appareil photo.
